(19) Europäisches Patentamt
European Patent Office
Office européen des brevets

(11) **EP 2 170 990 B1**

(12) **EUROPEAN PATENT SPECIFICATION**

(45) Date of publication and mention
of the grant of the patent:
**05.10.2016 Bulletin 2016/40**

(51) Int Cl.:
***C08L 27/18*** (2006.01)     ***C08F 12/20*** (2006.01)
***C08F 214/18*** (2006.01)     ***B29C 47/00*** (2006.01)

(21) Application number: **08772341.7**

(22) Date of filing: **02.07.2008**

(86) International application number:
**PCT/US2008/068977**

(87) International publication number:
**WO 2009/009361 (15.01.2009 Gazette 2009/03)**

(54) **METHODS FOR MELT-PROCESSING THERMOPLASTIC FLUOROPOLYMERS**

VERFAHREN ZUR VERARBEITUNG VON THERMOPLASTISCHEN FLUORPOLYMEREN IN DER SCHMELZE

PROCÉDÉS DE TRAITEMENT PAR FUSION DE FLUOROPOLYMÈRES THERMOPLASTIQUES

(84) Designated Contracting States:
**AT BE BG CH CY CZ DE DK EE ES FI FR GB GR HR HU IE IS IT LI LT LU LV MC MT NL NO PL PT RO SE SI SK TR**

(30) Priority: **11.07.2007 US 949017 P**

(43) Date of publication of application:
**07.04.2010 Bulletin 2010/14**

(73) Proprietor: **3M Innovative Properties Company**
**St. Paul, MN 55133-3427 (US)**

(72) Inventors:
• **KASPAR, Harold**
**D-84504 Burgkirchen (DE)**
• **HINTZER, Klaus**
**D-84504 Burgkirchen (DE)**
• **MUGGLI, Mark W.**
**D-84504 Burgkirchen (DE)**
• **FRIEDRICH, Stefan V.**
**D-84504 Burgkirchen (DE)**

(74) Representative: **Kurz, Arnd et al**
**3M Deutschland GmbH**
**3M Office of Intellectual Property Counsel**
**Carl-Schurz-Strasse 1**
**41453 Neuss (DE)**

(56) References cited:
**WO-A1-2006/057331     WO-A1-2006/057332**
**WO-A1-2007/102963     WO-A2-2004/111124**
**KR-A- 910 018 473     US-A- 4 748 204**

• **DATABASE CA [Online] CHEMICAL ABSTRACTS SERVICE, COLUMBUS, OHIO, US; XP002664525, retrieved from STN Database accession no. 1998:314753 -& JP 10 130341 A (NIPPON MEKTRON CO., LTD., JAPAN; UNIMATEC CO., LTD.) 19 May 1998 (1998-05-19)**
• **MEKHILEF NAFAA ET AL: "Polyvinylidene fluorine containing long chain branching for blown film applications", SOCIETY OF PLASTICS ENGINEERS. ANNUAL TECHNICAL CONFERENCES, THE SOCIETY, BROOKFIELD CENTER, CT, US, vol. 3, May 2007 (2007-05), pages 1576-1581, XP008145709, ISSN: 0272-5223**

EP 2 170 990 B1

## Description

### BACKGROUND

Fluoropolymers have been used in a variety of applications because of several desirable properties such as heat resistance, chemical resistance, weatherability, and UV-stability. Fluoropolymers include homo and co-polymers of a gaseous fluorinated olefin such as tetrafluoroethylene (TFE), chlorotrifluoroethylene (CTFE) and/or vinylidene fluoride (VDF) with one or more gaseous or liquid comonomers such as hexafluoropropylene (HFP) or perfluorovinyl ethers (PVE) or non-fluorinated olefins such as ethylene (E) and propylene (P).

Fluoropolymers include melt-processable and non-melt-processable polymers. For example, polytetrafluoroethylene and copolymers of tetrafluoroethylene with small amounts (e.g. not more than 1% by weight) of a comonomer are generally not melt-processable with conventional equipment because of high molecular weight and high melt viscosity. Accordingly, for these non-melt-processable fluoropolymers, special processing techniques have been developed for forming these fluoropolymers into desired articles and shapes.

Melt-processable thermoplastic fluoropolymers are also known and these can be obtained from various combinations of fluorinated and/or non-fluorinated monomers. As they are melt-processable, they can be processed with conventional equipment. Melt-processable thermoplastic fluoropolymers include generally amorphous fluoropolymers and fluoropolymers that have substantial crystallinity. Fluoropolymers that are generally amorphous are typically used to make fluoroelastomers by curing or vulcanizing the fluoropolymer. Although the elastomeric properties generally are obtained after curing, the fluoropolymers used for making fluoroelastomers are often also called fluoroelastomers. Melt-processable thermoplastic fluoropolymers that have substantial crystallinity and that accordingly have a clearly detectable and prominent melting point are known in the art as fluorothermoplasts or thermoplastic fluoropolymers.

The rate of extrusion of fluorothermoplast is limited to the speed at which the polymer melt undergoes melt fracture. This may be important in thermoforming processes such as wire and cable extrusion, film extrusion, blown film extrusion and injection molding. If the rate of extrusion exceeds the rate at which melt fracture occurs (known as critical shear rate), an undesired rough surface of the extruded article is obtained.

Bimodal fluorothermoplasts, for instance, THV and FEP, have been used in attempts to increase the extrusion speed by substantially broadening the molecular weight distribution (MWD) of the extruded polymer, thereby increasing the critical shear rate. The gain in critical shear rate, however, is typically accompanied by weaker overall mechanical properties such as flex life.

The process rate of fluorothermoplasts in wire and cable extrusion can also be increased by using an extrusion die with a relatively large orifice and then drawing the extruded melt to the desired final diameter. The melt draw is commonly characterized by the draw down ratio calculated as the ratio of the cross-sectional area of the die opening to the cross-sectional area of the finished extrudate. Typical draw down ratios of wire and cable extrusions are on the order of about 100. This melt draw, however, includes high elongational rates, which characterize the rate of the melt draw. Elongational rates are usually in the order of 1 to 1000 1/s. The polymer melt should exhibit a sufficiently high elongational viscosity. Otherwise the cone stability of the polymer melt in the extrusion will be insufficient, which results in undesired diameter variations of the extruded article as well as frequent cone-breaks.

Further attempts to increase the cone stability have included the use of perfluoro vinylethers (PVE), for example with FEP. PVEs have been added (as comonomers in fluorothermoplasts) in an attempt to retain mechanical properties while increasing the processing speed of the fluorothermoplasts. But, the additional incorporation of PVEs into fluorothermoplasts increases the manufacturing costs, which may not be desired. Furthermore, the formation of die deposits ("die drool") may occur, particularly with a broad MWD of the fluorothermoplast. In fast extrusion procedures, such as wire & cable insulation, large accumulation of die deposits separate from the die and may cause break-off of the melt cone ("cone-break") and thus interruption of the production process.

WO 2004/111124 A2 discloses that melt extrusion of non-fluorinated polymers may be improved by adding fluoropolymers having long chain branches, alone or in blends with linear fluoropolymers.

### SUMMARY

There exists a need for fluorothermoplasts that can be melt-processed at higher shear rates and that display greater width homogeneity, and for methods comprising melt-processing such fluorothermoplasts.

In one aspect, the present invention relates to a method comprising melt-processing a first composition wherein the first composition comprises a first fluoropolymer having a relaxation exponent of from 0.93 to 1.0 and a second fluoropolymer having a relaxation exponent of from 0.30 to 0.92, wherein the first and second fluoropolymers are melt-processable and thermoplastic and have a melting point of from 100°C to 320°C to give an extrusion product; wherein at least one filler selected from the group of organic fillers and inorganic fillers is added to at least one of the first and second fluoropolymers, and wherein the first fluoropolymer is selected from a copolymer of tetrafluoroethylene and hexafluoropropylene; polyvmytidcncfluoridcr a copolymer of tetrafluoroethylene, hexafluoropropylene, and vinylidene fluoride; a copolymer of tetrafluoropropylene and a perfluoro(alkyl vinyl) ether; and a copolymer of tetrafluoroethylene and perfluoro(alkoxy vinyl) ether. The extrusion product has a lower width homogeneity index value (i.e., is more homogeneous) than a comparative extrusion product formed by melt-processing a comparative composition wherein the comparative composition comprises the first polymer and is free of the second polymer. Further, the first and second fluoropolymers may be soluble in an organic solvent, wherein the individual components are characterized by a long chain branching index (LCBI) of from 0 to 0.1 for the first fluoropolymer and an LCBI of at least 0.2 for the second fluoropolymer. The so-obtained extrusion product has a lower width homogeneity index value than a comparative extrusion product formed by melt-processing a comparative composition wherein the comparative composition comprises the first polymer and is free of the second polymer.

In yet another aspect, the present invention relates to a method comprising melt-processing a first composition to give an extrusion product, wherein the first composition comprises a core-shell polymer. The core-shell polymer has a first fluoropolymer portion and a second fluoropolymer portion. A fluoropolymer having an identical chemical structure as the first polymer portion has a relaxation exponent of from 0.93 to 1.0, and a fluoropolymer having an identical chemical structure as the second fluoropolymer portion has a relaxation exponent of from 0.3 to 0.92. The extrusion product has a lower width homogeneity index value than a comparative extrusion composition wherein the comparative composition comprises the fluoropolymer having an identical chemical structure as the first polymer portion having a relaxation exponent of from 0.93 to 1.0 and the comparative composition is free of the polymer having an identical chemical structure as the second fluoropolymer portion having a relaxation exponent of from 0.3 to 0.92.

In some embodiments, it was found that the methods described herein may lead to extrusion products having an increased critical shear rate compared to the critical shear rate of the first fluoropolymer alone. Also in some embodiments, the compositions may exhibit a marked strain hardening, which generally increases the melt tension under elongational deformation (draw down). This phenomenon is not observed with conventional state-of-the-art polymers of having linear polymer chain architecture. Strain hardening induces the ability of the melt to heal up inhomogeneities of the cone (so-called self healing effect). As a result, in such embodiments, the width and/or thickness of an extruded article may show an improved homogeneity. This rheological characteristic makes such embodiments of the compositions suitable in applications with high draw down ratios.

In yet a further aspect, the present description relates to the use of the above-described compositions in the extrusion of an article, in particular in the extrusion of wires and cables, tubes and films and in blow molding processes.

The extrusion product has a thickness homogeneity index that is less than one fourth of the thickness homogeneity index of a comparative extrusion product formed by melt-processing a comparative composition wherein the comparative composition comprises the first polymer and is free of the second polymer. This ratio need not be observed for every elongation rate, but exists for at least some value of elongational rate (e.g., from 1 to 10 1/s). As provided herein and as apparent from the present examples, the relative size of the improvements observed may be related to the size of the extrusion die, the type of extrusion (film, pipe, etc), and other conditions.

In connection with the present description, a fluoropolymer is considered to be melt-processable if the melt viscosity of the polymer is low enough such that the polymer can be processed in conventional extrusion equipment used to extrude polymers. This typically corresponds to a melt viscosity at the processing temperature (e.g. 250 to 400°C), of no more than $10^6$ Pa*s, preferably $10^2$ to $10^5$ Pa*s.

The term "copolymer" in connection with the present invention should generally be understood to mean a polymer comprising repeating units derived from the recited monomers without excluding the option of other further repeating units being present that derive from other monomers not explicitly recited. Accordingly, for example the term "copolymer of monomers A and B" includes binary polymers of A and B as well as polymers that have further monomers other than A and B, such as terpolymers and quadpolymers.

The terms "width homogeneity" and "thickness homogeneity" in connection with extruded articles and methods described herein may be expressed as a "homogeneity index", which measures the standard deviation of the width or thickness of an extruded article. The lower the homogeneity index value, the more homogeneity an article possesses. The homogeneity indices may be expressed by the following:

**Width Homogeneity Index**

$$r_s = a_s / \overline{b}$$    **Equation 1**

$$a_s = \frac{1}{n}\sqrt{\sum_{i=1}^{n}(b_i - \overline{b})^2}$$ **Equation 2**

Where:

$a_s$:  (width homogeneity index) the average deviation of the film width at the selected position $i$ from the average film width $\overline{b}$

$n$:  number of randomly selected positions

$i$:  randomly selected position

$b_i$:  film width measured at a randomly selected position $i$

$\overline{b}$ :  average film width over all selected positions

**Thickness Homogeneity Index**

$$r_s = c_s / \overline{d}$$ **Equation 3**

$$c_s = \frac{1}{n}\sqrt{\sum_{i=1}^{n}(d_i - \overline{d})^2}$$ **Equation 4**

Where:

$c_s$:  (thickness homogeneity index) the average deviation of the film thickness at the selected position $i$ from the average film thickness $\overline{d}$

$n$:  number of randomly selected positions

$i$:  randomly selected position

$d_i$:  film thickness measured at a randomly selected position $i$

$\overline{d}$ :  average film thickness over all selected positions

**DETAILED DESCRIPTION**

There is a need to develop methods for improved processing of fluorothermoplastics. The molecular weight distribution (MWD) of fluoropolymers is relatively narrow (typically Mw/Mn is from 1.6 to 2.5) compared to other technical polymers. The narrow MWD leads to flat, similar viscosity curves with a marked Newtonian viscosity plateau. This processing behavior (low structural viscosity) tends to lead to less pronounced shear thinning during melt processing for fluoropolymers.

The less pronounced shear thinning may tend to lead to processing bottlenecks for fluoropolymer melt-extrusion. The classical solutions to increase processability, however, such as using multi-modal polymers, may lead to decreased mechanical properties in fluoropolymer systems.

In the present description, it has been found that melt-processing compositions comprising a mixture of fluoropolymers having long chain branches and linear fluoropolymers may display improved processing while maintaining a relatively narrow MWD (thus, retaining the beneficial mechanical properties of the fluoropolymer). The melt-rheological profile of such compositions comprising these mixtures differs fundamentally from that of the linear fluoropolymers alone. Compositions comprising fluoropolymers having long chain branches display marked structural viscosity that can only be achieved with linear materials having a broad MWD.

The present description further finds that melt-processing compositions comprising fluoropolymers having long chain branches may benefit from a marked strain hardening in extensional flow. This strain hardening behavior may create an enormous processing advantage in extrusion processes in which extensional forces are involved such as melt-extrusion processes. Melt extrusion processes include, for instance, melt spinning, wire and cable extrusion, blown film, hose extrusion, film extrusion, tube extrusion, and blow-molding of hollow bodies. Increased strain hardening may, in some embodiments, lead to an increased stability of an extrusion melt cone. Further, localized constrictions in the melt contour may be self-healing. As a result, extruded articles may be self-healing and thereby obtain a higher degree of width homogeneity as well as homogeneity in wall thickness.

The overall quality of melt-extruded articles produced by the methods described herein may be improved over previous methods. Furthermore, because the articles produced by the methods described herein give a lower width homogeneity index value, less scrap material is produced. Therefore, the present invention may provide certain economic and environmental advantages over previous methods.

In one aspect, the present invention relates to a method, according to claim 1, comprising melt-processing a first composition wherein the first composition comprises a melt-processable and thermoplastic blend of fluoropolymers each having a melting point between 100°C and 320°C. The first composition comprises a first fluoropolymer having a relaxation exponent of from 0.93 to 1.0 and a second fluoropolymer having a relaxation exponent of from 0.3 to 0.92, wherein at least one filler selected from the group of organic fillers and inorganic fillers is added to at least one of the first and second fluoropolymers. The extrusion product has a lower width homogeneity index value than a comparative extrusion product formed by melt-processing a comparative composition wherein the comparative composition comprises the first polymer and is free of the second polymer.

In one embodiment, the second fluoropolymer is derived from (a) one or more gaseous fluorinated monomers; (b) one or more modifiers; and (c) optionally one or more comonomers selected from non-gaseous fluorinated monomers and non-fluorinated monomers. In one embodiment, the one or more modifiers is an olefin that has on at least one carbon of the double bond a bromine or iodine atom. The olefin may, apart from containing Br and/or I atoms, be non-fluorinated, i.e. not contain fluorine atoms; may be partially fluorinated, i.e. some but not all hydrogen atoms have been replaced with fluorine atoms; or the olefin may be a perfluorinated compound in which all hydrogen atoms have been replaced with fluorine atoms except for those replaced with I or Br.

In a particular embodiment, the olefin may correspond to the general formula:

$$X_2C=CXZ$$

wherein each X may be the same or different and is selected from the group consisting of hydrogen, F, Cl, Br and I, with the proviso that at least one X represents Br or I, Z represents hydrogen, F, Cl, Br, I, a perfluoroalkyl group, a perfluoroalkoxy group or a perfluoropolyether group. Examples of perfluoroalkyl groups include linear or branched perfluoroalkyl groups having between 1 and 8 carbon atoms, for example 1 to 5 carbon atoms. Examples of perfluoroalkoxy groups include those that have between 1 and 8 carbon atoms, for example between 1 and 5 carbon atoms, in the alkyl group, and whereby the alkyl group may be linear or branched. Examples include perfluoropolyether groups, such as those corresponding to the formula:

$$-O(R^1_fO)_n(R^2_fO)_mR^3_f$$

wherein $R^1_f$ and $R^2_f$ are each linear or branched perfluoroalkylene groups of 1 to 6 carbon atoms, in particular 2 to 6 carbon atoms; m and n are independently 0 to 10 with m+n being at least 1; and $R^3_f$ is a perfluoroalkyl group of 1 to 6 carbon atoms.

In a particular embodiment, olefins of formula $X_2C=CXZ$ can be employed wherein X is selected from hydrogen, F and Br with the proviso that at least one X represents Br and Z is hydrogen, F, Br, a perfluoroalkyl group or a perfluoroalkoxy group. Specific examples of olefins include 1-bromo-1,2,2,-trifluoroethylene (referred to as BTFE), vinylbromide, 1,1-dibromoethylene, 1,2-dibromoethylene, 1-bromo-2,3,3,3-tetrafluoro-propene, and 1-bromo-2,2-difluoroethylene (BDFE). It is also contemplated to use a mixture of the bromine or iodine containing olefins.

In other embodiments, the second fluoropolymer is a non-thermosettable copolymer of tetrafluoroethylene copolymerized with a small amount of an iodo(perfluoroalkyl)ethylene. In particular, the iodo(perfluoroalkyl)ethylene may be 4-iodo-3,3,4,4-tetrafluorobutene-1 (ITFB). One having ordinary skill in the art will recognize that the modifier is not particularly limited, so long as the resulting polymer has a relaxation exponent of less or equal to 0.92, for instance, from 0.3 to 0.92.

In a further embodiment of the present invention, the modifier may correspond to the formula:

$$X^a_2C=CX^a-R_f-Br$$

wherein each $X^a$ independently represents hydrogen, fluorine, bromine, chlorine or iodine; $R_f$ is a perfluoroalkylene group, typically having 1 to 8 carbon atoms, a perfluorooxyalkylene group or a divalent perfluoropolyether group. The bromine may be contained in a terminal position (i.e., on a primary carbon atom) of the $R_f$ group, but may alternatively be contained along the chain of the $R_f$ group (that is, on a secondary or tertiary carbon atom). Examples of such olefins include:

CH$_2$=CH-(CF$_2$)$_x$-CF$_2$Br, where x is from 0 to 5;
CF$_2$=CF-(CF$_2$)$_x$-CFBr-CF$_3$, where x is from 0 to 5;
CF$_2$=CF-(CF$_2$)$_x$-CF$_2$Br, where x is from 0 to 5;
CH$_2$=CH-O-(CF$_2$)$_x$-CF$_2$Br, where x is from 0 to 5;
CF$_2$=CF-O-(CF$_2$)$_x$-CF$_2$Br, where x is from 0 to 5;
CF$_2$=CF-(O-CF$_2$-CF$_2$-O)$_x$-(CF$_2$)$_y$-CF$_2$Br, where x is from 0 to 3, and y is from 0 to 5;
CF$_2$=CF-O-(CF$_2$-CF(CF$_3$)-O-)$_x$-(CF$_2$)$_y$-CF$_2$Br, where x is from 0 to 3, and y is from 0 to 5;
CF$_2$=CH-O-(CF$_2$)$_x$-CF$_2$Br, where x is from 0 to 5; and
CH$_2$=CF-O-(CF$_2$)$_x$-CF$_2$Br, where x is from 0 to 5.

In still a further embodiment of the invention, a mixture of olefins according to the formula X$^a_2$C=CX$^a$-R$_f$-Br with one or more olefins having a bromine or iodine atom at the double bond is used.

In another embodiment, the modifier may be represented by the formula CH$_2$=CH-R$_f$-CH=CH$_2$, wherein R$_f$ is selected from a divalent perfluoroaliphatic group optionally containing one or more O atoms, a perfluoroarylene group, and a perfluoroalkarylene group. The divalent perfluoroaliphatic group includes, for instance, perfluoroalkylene groups and perfluorooxyalkylene groups. Included in this embodiment are, for instance, 1,8-divinyl perfluoro(octane); 1,6-divinyl perfluoro(hexane); and 1,4-divinyl perfluoro(butane).

In yet another embodiment, the modifier may be a monomeric unit deriving from a bis-olefin. Such bis-olefins may be described as having one of the following general formulas:

$$CR_1R_2=CF-(CF_2)_nO-(CF_2)_m-CF=CR_3R_4$$

$$CR_1R_2=CF-CF_2-O-Rf_1-O-CF_2-CF=CR_3R_4$$

$$X-Rf_2-Y$$

with X and Y being independently from each other one of the following R$_1$R$_2$C=CR$_3$-, R$_1$R$_2$C=CR$_3$-O-; R$_1$R$_2$C=CR$_3$-CR$_4$R$_5$-O-;

wherein each of R$_1$, R$_2$, R$_3$, R$_4$ and R$_5$ is independently selected from Rf$_1$, F or H,

Rf$_1$ being selected from the group consisting of Rf$_2$ or being a linear or branched perfluoroalkyl, perfluoroalkyl ether or perfluoroalkyl polyether residue and

Rf$_2$ being a non-fluorinated or a fluorinated or a perfluorinated aryl which (in addition to the olefinic moieties) may be non-substituted or substituted with

- one or more halogen other than F;
- one or more perfluorinated alkyl residue;
- one or more perfluorinated alkoxy residue;
- one or more perfluorinated poly oxy alkyl residue;
- one or more fluorinated, perfluorinated or non-fluorinated phenyl or phenoxy moiety or combinations thereof, and wherein the phenyl or phenoxy residues may be non-substituted or substituted with one or more perfluorinated alkyl, alkoxy or polyoxy alkyl residue or one or more halogens other than F or combinations thereof;

n and m being independent from each other integers of from 0 to 6 with the proviso that n and m are not both 0.

The second fluoropolymers according to the present description have so-called long chain branches. That is, the polymers are not linear, in that one or more branches from the backbone are present. Without intending to be bound by theory, it is believed that these branches result from abstraction of the bromine or iodine atom from the modifier once it is polymerized into the backbone of the fluoropolymer. The so-produced radical on the backbone may then cause further polymerization with the result that a polymeric chain is formed as a branch on the backbone. Such branches are known in the art as long chain branches or LCBs.

The second fluoropolymers for use in the melt-processable polymer composition are non-linear polymers i.e. branched polymers. If the fluoropolymer is soluble in an organic solvent, the level of branching or non-linearity can be characterized throug the long chain branching index (LCBI). The LCBI can be determined as described in R. N. Shroff, H. Mavridis; Macromol., 32, 8464-8464 (1999) & 34, 7362-7367 (2001) according to the equation:

$$LCBI = \frac{\eta_{0,br.}^{1/a}}{[\eta]_{br.}} \cdot \frac{1}{k^{1/a}} - 1 \qquad \textbf{Equation 5}$$

In the above equation, $\eta_{0,br}$ is the zero shear viscosity (units Pa*s) of the branched fluoropolymer measured at a temperature T and $[\eta]_{br}$ is the intrinsic viscosity (units ml/g) of the branched fluoropolymer at a temperature T in a solvent in which the branched fluoropolymer can be dissolved and a and k are constants. These constants are determined from the following equation:

$$\eta_{0,lin} = k \cdot [\eta]_{lin.}^{a} \qquad \textbf{Equation 6}$$

wherein $\eta_{0,lin}$ and $[\eta]_{lin}$ represent respectively the zero shear viscosity and intrinsic viscosity of the corresponding linear fluoropolymer measured at the respective temperatures T and T' and in the same solvent. Thus, the LCBI is independent of the selection of the measurement temperatures and solvent chosen, provided, of course, that the same solvent and temperatures are used in equations 5 and 6.

The values a and k, along with the test conditions for some of the fluoropolymers that may be used in the melt-processable polymer composition are set forth:

| Polymer | test condition | a-value | k-value |
|---|---|---|---|
| $TFE_{39}/HFP_{11}/VDF_{50}$ | A | 5.3 | $2.5 \times 10^{-7}$ |
| $TFE_{24.5}/HFP_{23}/VDF_{52.5}$ | A | 5.3 | $3.8 \times 10^{-7}$ |
| $VDF_{78}/HFP_{22}$ | A | 5.3 | $1.3 \times 10^{-7}$ |
| polyvinylidene fluoride | B | 5.3 | $1.2 \times 10^{-7}$ |
| polyvinylidene fluoride | C | 5.3 | $2.2 \times 10^{-7}$ |

In the above, the indexes to the monomer units in the polymer indicate the amount of the respective unit in mol% and the test conditions are as follows:

A: shear viscosity at 265°C and the intrinsic viscosity in methyl ethyl ketone at 35°C
B: shear viscosity at 230°C and the intrinsic viscosity in dimethylformamide at 23°C
C: shear viscosity at 230°C and the intrinsic viscosity in dimethylformamide at 110°C.

It can be observed from the above that the constant "a" appears to be independent of the fluoropolymer tested, whereas the k-value varies with composition of the fluoropolymer and test condition used.

The LCBI of the second fluoropolymer may, for instance, have a value of at least 0.2. The LCBI of the second fluoropolymer may be at least 0.3, at least 0.4, or even at least 0.5. The upper limit of the LCBI is not particularly limited by the present invention, and may be up to 10, up to 5, or even up to 2. Generally, the effectiveness of the second fluoropolymer to decrease melt defects will increase with increasing value of the LCBI for polymers having similar zero shear rate viscosities ($\eta_0$). However, when the level of branching (and thus the LCBI value) becomes too large, the fluoropolymer may have a gel fraction that cannot be dissolved in an organic solvent. This observation may provide a practical limit to the operating range of a fluoropolymer processor, but does not necessarily indicate an upper limit for the invention described herein. At such high levels of branching, the advantageous effects of the fluoropolymer on the processing of the melt-processable polymer composition may be reduced, as the melt viscosity of the fluoropolymer becomes too high. One skilled in the art may readily determine the appropriate value of LCBI. Generally, the LCBI may be from 0.2 to 5, for instance from 0.4 to 2.0.

If a fluoropolymer is insoluble in any organic solvent, the level of branching or non-linearity can alternatively be characterized through the relaxation exponent n. As disclosed in WO 2004/094491, the relaxation exponent n of a branched fluoropolymer is typically up to 0.90, for instance, from 0.2 and above, from 0.3 and above, even from 0.35 and above, up to 0.85, even up to 0.92. In general, the closer n is to 1, the fewer branches that are present.

The level of long chain branches and relaxation exponent of a fluorothermoplast can be readily and reproducibly controlled by varying the amount of the modifier used. Thus, in general, a lower amount of the modifier will produce a higher relaxation exponent and a larger amount of modifier will decrease the relaxation exponent. Additional information is disclosed by Stange et al.; Macromol., 40, 7, 2409 (2007). Although other factors, such as the polymerization conditions may to some extent also influence the level of long chain branches and the relaxation exponent, the amount of the modifier needed will typically be up to 0.4% by weight based on the total weight of monomers fed to the polymerization. A useful amount of modifier may be from 0.01 % by weight, or even from 0.05%, and up to 0.25% by weight, even up to 0.4% by weight, or higher. The modifier can be added at the start of the polymerization and/or may be added during the polymerization in a continuous way and/or portion-wise.

The second fluoropolymers of the present description may be crystalline, with a melting point of from 100 to 320°C. These second fluoropolymers are not curable or only marginally curable using a peroxide cure system, despite the fact that, when used, some of the modifiers may contain bromine and/or iodine atoms, which could introduce bromine and/or iodine atoms into the polymer chain. The amount of the modifier, when used, is so small that any bromine or iodine atom that may remain present after the polymerization reaction is insufficient to allow any substantial curing as is observed and required in the making of fluoroelastomers.

The polymer compositions comprising the first and second fluoropolymer are characterized by the fact that they show a marked strain hardening. Strain hardening can be quantified by the dimensionless strain hardening coefficient S. One way to determine S is by running elongational experiments in a deformation controlled rheometer equipped with a special elongational device, such as AR Rheometers (TA Instruments, New Castle, DE, USA). In this commercially available instrumental setup, the second fluoropolymers of the compositions of the present invention show a strain hardening coefficient S of at least 1.2 at elongational rates $\varepsilon_0^{\bullet}$ ranging from 0.3 to 10 1/s. A polymer with S smaller than 1.2 at elongational rate of $\varepsilon_0^{\bullet}$ =1 1/s is usually classified as having a linear polymer chain architecture.

An alternative way to determine S is given by a melt spinning apparatus that is capable of measuring the spinning force. Well-known apparatuses include, for instance, the Rheotens (Goettfert, Buchen, Germany). The maximal spinning force $F_{max.}$ divided by the extrusion pressure p recorded under defined conditions (defined die geometry and a defined extrusion rate) is related to the strain hardening. The second fluoropolymers described herein show a technological coefficient $F_{max}/p$, given in units of cN/bar, of at least 0.064. A polymer with $F_{max}/p$ smaller than 0.064 may be classified as a linear polymer. The technological coefficient $F_{max}/p$ correlates with the strain hardening coefficient S (quantified at an elongational rate of 1 1/s) in the following way:

$$F_{max.}[cN]/p[bar] = -0.055 + 0.099 \times S \qquad \textbf{Equation 7}$$

The first and second fluoropolymers described herein can be obtained with any of the known polymerization techniques including polymerization in solution, solvent-slurry polymerization, suspension polymerization, and polymerization in supercritical $CO_2$. The first and second fluoropolymers may also be made through an aqueous emulsion polymerization process.

For aqueous emulsion polymerization, the reactor vessel for use in the aqueous emulsion polymerization process is typically a pressurizable vessel capable of withstanding the internal pressures during the polymerization reaction. Typically, the reaction vessel will include a mechanical agitator, which will produce thorough mixing of the reactor contents and heat exchange system. Any quantity of the fluoromonomer(s) may be charged to the reactor vessel. The monomers may be charged batch-wise or in a continuous or semi-continuous manner. The independent rate at which the monomers are added to the kettle will depend on the consumption rate of the particular monomer with time. Preferably, the rate of addition of monomer will equal the rate of consumption of monomer, i.e. conversion of monomer into polymer.

The aqueous emulsion polymerization reaction kettle may be charged with water, the amounts of which are not critical, to provide an aqueous phase. To the aqueous phase is generally also added a fluorinated surfactant, typically a non-telogenic fluorinated surfactant. Of course, methods employing polymerization methods free of added fluorinated surfactant are also suitable. When used, a fluorinated surfactant is typically used in amount of 0.01% by weight to 1% by weight. Suitable fluorinated surfactants include any fluorinated surfactant commonly employed in aqueous emulsion polymerization.

In some embodiments, fluorinated surfactants are those that correspond to the general formula:

Y-$R_f$-Z-M

wherein Y represents hydrogen, Cl or F; $R_f$ represents a linear or branched perfluorinated alkylene having 4 to 10 carbon atoms; Z represents COO- or $SO_3$- and M represents an alkali metal ion or an ammonium ion. Particular fluorinated surfactants for use in this invention are the ammonium salts of perfluorooctanoic acid and perfluorooctane sulphonic acid. Mixtures of fluorinated surfactants can also be used. Also contemplated for use in the preparation of the polymers described herein are fluorinated polyether surfactants, such as described in EP 1,189,953.

In further embodiments, fluorinated surfactants include non-telogenic surfactants having an anionic portion with the general formula (I):

$$R_f\text{-O-L-CO}_2\text{-} \qquad (I)$$

wherein $R_f$ is selected from a partially fluorinated alkyl group, a perfluorinated alkyl group, a partially fluorinated alkyl group interrupted by one or more oxygen atoms, and a perfluorinated alkyl group interrupted by one or more oxygen atoms, wherein $R_f$ has from 1 to 10 carbon atoms; and L is an alkylene group having the general formula $(CX_2)_n$ wherein each X is independently selected from $R_f$, fluorine, and hydrogen and n is selected from 1 to 5, with the proviso that the surfactant contains at least one unit selected from a $-CH_2-$ unit and a $-CHF-$ unit.

In yet other embodiments, fluorinated surfactants include one or more fluorinated surfactants selected from fluorinated carboxylic acids or salts thereof having the general formula (II):

$$[R_f\text{-O-L'-COO}^-]_i \, X^{i+} \qquad (II)$$

wherein L' represents a linear partially or fully fluorinated alkylene group or an aliphatic hydrocarbon group, $R_f$ represents a linear partially or fully fluorinated aliphatic group or a linear partially or fully fluorinated aliphatic group interrupted with one or more oxygen atoms, $X^{i+}$ represents a cation having the valence i and i is 1, 2 or 3.

Specific examples of compounds according to formula (II) include the following:

**$R_f$-O-CHF-COOH**
$C_3F_7$-O-CHF-COOH
$CF_3$-O-$CF_2CF_2$-$CF_2$-O-CHF-COOH
$CF_3CF_2CF_2$-O-$CF2_CF_2$-$CF_2$-O-CHF-COOH
$CF_3$-O-$CF_2$-$CF_2$-O-CHF-COOH
$CF_3$-O-$CF_2$-O-$CF_2$-$CF_2$-O-CHF-COOH
$CF_3$-(O-$CF_2$)2-O-$CF_2$-$CF_2$-O-CHF-COOH
$CF_3$-(O-$CF_2$)$_3$-O-$CF_2$-$CF_2$-O-CHF-COOH
**$R_f$-O-CHF-$CF_2$-COOH**
$CF_3$-O-CHF-$CF_2$-COOH
$CF_3$-O-$CF_2$-$CF_2$-O-CHF-$CF_2$-COOH
$CF_3$-$CF_2$-O-CHF-$CF_2$-COOH
$CF_3$-O-$CF_2$-$CF_2$-$CF_2$-O-CHF-$CF_2$-COOH
$CF_3$-O-$CF_2$-O-$CF_2$-$CF_2$-O-CHF-$CF_2$-COOH
$CF_3$-(O-$CF_2$)$_2$-O-$CF_2$-$CF_2$-O-CHF-$CF_2$-COOH
$CF_3$-(O-$CF_2$)$_3$-O-$CF_2$-$CF_2$-O-CHF-$CF_2$-COOH
$CF_3$-CHF-O-$CF_2$-$CF_2$-O-CHF-$CF_2$-COOH
$CF_3$-CHF-O-$CF_2$-$CF_2$-$CF_2$-O-CHF-$CF_2$-COOH
**$R_f$-O-$CF_2$-CHFCOOH**
$CF_3$-O-$CF_2$-CHF-COOH
$C_3F_7$-O-$CF_2$-CHF-COOH
$CF_3$-O-$CF_2$-$CF_2$-$CF_2$-O-$CF_2$-CHF-COOH
$CF_3$-O-$CF_2$-O-$CF_2$-$CF_2$-O-$CF_2$-CHF-COOH
$CF_3$-(O-$CF_2$)$_2$-O-$CF_2$-$CF_2$-O-$CF_2$-CHF-COOH
$CF_3$-(O-$CF_2$)$_3$-O-$CF_2$-$CF_2$-O-$CF_2$-CHF-COOH
**$R_f$-O-$CF_2$-CHF-$CF_2$COOH**
$CF_3$-O-$CF_2$-CHF-$CF_2$-COOH
$C_2F_5$-O-$CF_2$-CHF-$CF_2$-COOH
$C_3F_7$-O-$CF_2$-CHF-$CF_2$-COOH
$CF_3$-O-$CF_2$-$CF_2$-$CF_2$-O-$CF_2$-CHF-$CF_2$-COOH
$CF_3$-O-$CF_2$-O-$CF_2$-$CF_2$-O-$CF_2$-CHF-$CF_2$-COOH
$CF_3$-(O-$CF_2$)$_2$-O-$CF_2$-$CF_2$-O-$CF_2$-CHF-$CF_2$-COOH
$CF_3$-(O-$CF_2$)$_3$-O-$CF_2$-$CF_2$-O-$CF_2$-CHF-$CF_2$-COOH
**$R_f$-(O)$_m$-CHF-$CF_2$-O-(CH$_2$)$_n$-COOH n=1,2 or 3; m=0 or1**
$CF_3$-O-CHF-$CF_2$-O-$CH_2$-COOH
$CF_3$-O-$CF_2$-$CF_2$-$CF_2$-O-CHF-$CF_2$-O-$CH_2$-COOH
$C_3F_7$-O-CHF-$CF_2$-O-$CH_2$-COOH
$C_3F_7$-O-CHF-$CF_2$-O-$CH_2$-$CH_2$-COOH

$C_3F_7\text{-}O\text{-}CF_2\text{-}CF_2\text{-}O\text{-}CHF\text{-}CF_2\text{-}OCH_2COOH$

$C_3F_7\text{-}O\text{-}CF_2\text{-}CF_2\text{-}CF_2\text{-}O\text{-}CHF\text{-}CF_2\text{-}OCH_2COOH$

$C_3F_7\text{-}O\text{-}CF_2\text{-}CHF\text{-}CF_2\text{-}OCH_2COOH$

$CF_3\text{-}CHF\text{-}CF_2\text{-}O\text{-}CH_2COOH$

$C_3F_7\text{-}CF_2\text{-}CHF\text{-}CF_2\text{-}OCH_2\text{-}COOH$

$CF_3\text{-}O\text{-}CF_2\text{-}CF_2\text{-}O\text{-}CH_2\text{-}COOH$

$CF_3\text{-}O\text{-}CF_2\text{-}CF_2\text{-}CF_2\text{-}O\text{-}CF_2\text{-}CF_2\text{-}O\text{-}CH_2\text{-}COOH$

$C_3F_7\text{-}O\text{-}CF_2\text{-}CF_2\text{-}O\text{-}CH_2\text{-}COOH$

$C_3F_7\text{-}O\text{-}CF_2\text{-}CF_2\text{-}O\text{-}CH_2\text{-}CH_2\text{-}COOH$

$C_3F_7\text{-}O\text{-}CF_2\text{-}CF_2\text{-}O\text{-}CF_2\text{-}CF_2\text{-}OCH_2COOH$

$C_3F_7O\text{-}CF_2\text{-}CF_2\text{-}CF_2\text{-}O\text{-}CF_2\text{-}CF_2\text{-}OCH_2COOH$

$C_3F_7\text{-}O\text{-}CF_2\text{-}CF_2\text{-}CF_2\text{-}OCH_2COOH$

$C_4F_9\text{-}O\text{-}CH_2COOH$

$C_4F_9\text{-}O\text{-}CH_2\text{-}CH_2\text{-}COOH$

$C_3F_7\text{-}O\text{-}CH_2COOH$

$C_6F_{13}\text{-}OCH_2\text{-}COOH$

**$R_f\text{-}O\text{-}CF_2\text{-}CF_2\text{-}COOH$**

$CF_3\text{-}O\text{-}CF_2\text{-}CF_2\text{-}COOH$

$C_2F_5\text{-}O\text{-}CF_2\text{-}CF_2\text{-}COOH$

$C_3F_7\text{-}O\text{-}CF_2\text{-}CF_2\text{-}COOH$

$C_4F_9\text{-}O\text{-}CF_2\text{-}CF_2\text{-}COOH$

**$R_f\text{-}(O\text{-}CF_2)u\text{-}O\text{-}CF_2\text{-}COOH$ with u being an integer of 1, 2, 3, 4, 5 or 6**

$CF_3\text{-}(O\text{-}CF_2)_3\text{-}O\text{-}CF_2\text{-}COOH$

$CF_3\text{-}(O\text{-}CF_2)_2\text{-}O\text{-}CF_2\text{-}COOH$

$CF_3\text{-}(O\text{-}CF_2)_1\text{-}O\text{-}CF_2\text{-}COOH$

**$R_f\text{-}(O\text{-}CF_2\text{-}CF_2)_k\text{-}O\text{-}CF_2\text{-}COOH$ with k being 1, 2 or 3**

$CF_3\text{-}(O\text{-}CF_2\text{-}CF_2)_1\text{-}O\text{-}CF_2\text{-}COOH$

$C_2F_5\text{-}(O\text{-}CF_2\text{-}CF_2)_1\text{-}O\text{-}CF_2\text{-}COOH$

$C_3F_7\text{-}(O\text{-}CF_2\text{-}CF_2)_1\text{-}O\text{-}CF_2\text{-}COOH$

$C_4F_9\text{-}(O\text{-}CF_2\text{-}CF_2)_1\text{-}O\text{-}CF_2\text{-}COOH$

$C_2F_5\text{-}(O\text{-}CF_2\text{-}CF_2)_2\text{-}O\text{-}CF_2\text{-}COOH$

$CF_3\text{-}(O\text{-}CF_2\text{-}CF_2)_2\text{-}O\text{-}CF_2\text{-}COOH$

$C_3F_7\text{-}(O\text{-}CF_2\text{-}CF_2)_2\text{-}O\text{-}CF_2\text{-}COOH$

$C_4F_9\text{-}(O\text{-}CF_2\text{-}CF_2)_2\text{-}O\text{-}CF_2\text{-}COOH$

**$R_f\text{-}O\text{-}CF_2\text{-}COOH$**

$C_3F_7\text{-}O\text{-}CF_2\text{-}COOH$

$CF_3\text{-}O\text{-}CF_2\text{-}CF_2\text{-}CF_2\text{-}O\text{-}CF_2\text{-}COOH$

**$CF_3\text{-}CHF\text{-}O\text{-}(CF_2)_o\text{-}COOH$ with o being an integer of 1, 2, 3, 4, 5 or 6**

$CF_3CFH\text{-}O\text{-}(CF_2)_3\text{-}COOH$

$CF_3CFH\text{-}O\text{-}(CF_2)_5\text{-}COOH$

**$CF_3\text{-}CF_2\text{-}O\text{-}(CF_2)_o\text{-}COOH$ with o being as above**

$CF_3\text{-}CF_2\text{-}O\text{-}(CF_2)_3COOH$

$CF_3\text{-}CF_2\text{-}O\text{-}(CF_2)_5COOH$

In the above generic formulas, $R_f$ has the meaning as defined above in respect of generic formula (II). It is understood that while the above list of compounds only lists the acids, the corresponding salts, in particular the $NH_4^+$, potassium, sodium or lithium salts can equally be used.

A chain transfer agent may be charged to the reaction kettle prior to the initiation of the polymerization. Useful chain transfer agents include $C_2$ to $C_6$ hydrocarbons such as ethane, alcohols, ethers, esters including aliphatic carboxylic acid esters and malonic esters, ketones and halocarbons. Particularly useful chain transfer agents are dialkylethers such as dimethyl ether and methyl tertiary butyl ether. Further additions of chain transfer agent in a continuous or semi-continuous way during the polymerization may also be carried out. For example, a fluoropolymer having a bimodal molecular weight distribution is conveniently prepared by first polymerizing fluorinated monomer in the presence of an initial amount of chain transfer agent and then adding at a later point in the polymerization further chain transfer agent together with additional monomer.

The polymerization is usually initiated after an initial charge of monomer by adding an initiator or initiator system to the aqueous phase. For example, peroxides can be used as free radical initiators. Specific examples of peroxide initiators include, hydrogen peroxide, diacylperoxides such as diacetylperoxide, dipropionylperoxide, dibutyrylperoxide, dibenzoylperoxide, benzoylacetylperoxide, diglutaric acid peroxide and dilaurylperoxide, and further water soluble per-acids and water soluble salts thereof such as e.g. ammonium, sodium or potassium salts. Examples of per-acids include peracetic acid. Esters of the peracid can be used as well and examples thereof include tertiary-butylperoxyacetate and tertiary-butylperoxypivalate. A further class of initiators that can be used are water soluble azo-compounds. Suitable redox systems for use as initiators include for example a combination of peroxodisulphate and hydrogen sulphite or disulphite, a combination of thiosulphate and peroxodisulphate or a combination of peroxodisulphate and hydrazine. Further initiators that can be used are ammonium- alkali- or earth alkali salts of persulfates, permanganic or manganic acid or manganic acids. The amount of initiator employed is typically between 0.03 and 2 % by weight, preferably between 0.05 and 1 % by weight based on the total weight of the polymerization mixture. The full amount of initiator may be added at the start of the polymerization or the initiator can be added to the polymerization in a continuous way during the polymerization until a conversion of 70 to 80% of the fed monomers is reached. One can also add part of the initiator at the start and the remainder in one or separate additional portions during the polymerization. Accelerators such as for example water-soluble salts of iron, copper and silver may also be added.

During the initiation of the polymerization reaction, the sealed reactor kettle and its contents are conveniently pre-heated to the reaction temperature. Polymerization temperatures may be from 20°C, from 30°C, or even from 40°C and may further be up to 100°C, up to 110°C, or even up to 150°C. The polymerization pressure may range, for instance, from 4 to 30 bar, in particular from 8 to 20 bar. The aqueous emulsion polymerization system may further comprise auxiliaries, such as buffers and complex-formers.

The amount of polymer solids that can be obtained at the end of the polymerization is typically at least 10% by weight, or even at least 20% by weight, and up to 40% by weight, and even up to 45% by weight; and the average particle size of the resulting fluoropolymer is typically between 50 nm and 500 nm.

The first and second fluoropolymers may, in other embodiments, be obtained by solvent-slurry polymerization techniques. For instance, fluoropolymers may be produced by a process comprising polymerizing at least one fluorinated monomer in a polymerization medium comprising a low-telogenic hydrofluoroether (HFE) selected from:

a) an HFE of the formula $R_fCH_2OCF_2H$;
wherein $R_f$ is selected from a linear partially fluorinated alkyl group, a linear partially fluorinated alkyl group interrupted with one or more oxygen atoms, a branched partially fluorinated alkyl group, a branched partially fluorinated alkyl group interrupted by one or more oxygen atoms, and a perfluorinated alkenyl group; and
wherein the total number of carbon atoms of $R_f$ is equal to or greater than 7;
b) an HFE of the formula:

$$R_f{}^1\text{-O-}R_f{}^2$$

wherein $R_f{}^1$ is selected from $(CF_3)_2CF\text{-}CHF\text{-}CF(CF_3)\text{-}$, $(CF_3)_2CF\text{-}(CHF\text{-}CF_3)\text{-}$, $(CF_3)_2CH\text{-}C(CF(CF_3)_2)_2\text{-}$, $(CF_3)_2C\text{-}CH\text{-}(CF\text{-}(CF_3)_2)_2\text{-}$, $(CF_3)_2C\text{-}CH(CF_2CF_3)(CF\text{-}(CF_3)_2)\text{-}$ and $(CF_3)_2CH\text{-}C(CF_2CF_3)(CF(CF_3)_2)\text{-}$; and $R_f{}^2$ is $\text{-}C_6H_4\text{-}X$ where X is selected from H, F, a perfluorinated alkyl group or a partially fluorinated alkyl group;
c) an HFE of the formula in (b), wherein $R_f{}^1$ is selected from $(CF_3)_2CH\text{-}CF_2\text{-}$ and $(CF_3)_2C\text{=}CF\text{-}$; and $R_f{}^2$ is selected from $\text{-}C_6H_4\text{-}X$, and $\text{-}CH_2\text{-}(CF_2)_n\text{-}H$ where X is selected from H, F, a perfluorinated alkyl group or a partially fluorinated alkyl group and n=4-6;
d) an HFE of the formula in (b), wherein $R_f{}^1$ is selected from $HCF_2CF_2\text{-}$ and $CF_3\text{-}CHF\text{-}CF_2\text{-}$; and $R_f{}^2$ is selected from $\text{-}CH_2(CF_2)_nH$ and n is selected such that the total number of carbon atoms of formula I is greater than or equal to 9; and
e) an HFE polyether selected from $R_fO(CF_2CFCF_3)_nOCHFCF_3$ where n=2-4 and $R_f$ is perfluoroalkyl; $CF_3CHFO(CF_2)_nOCHFCF_3$ where n=4-6; $HCF_2(OCF_2)_nOCF_2H$ where n=2-6; and $HCF_2(OCF_2CF_2)_nOCF_2H$ where n=2-6.

The polymerization processes comprise polymerizing one or more gaseous fluorinated monomer which may be perfluorinated or not. Examples of a gaseous fluorinated monomer include tetrafluoroethylene, chlorotrifluoroethylene, vinylidene fluoride, perfluoroalkyl vinyl monomers such as hexafluoropropylene, fluorinated allyl ethers and fluorinated alkoxyvinyl ethers, both of which may be perfluorinated, and fluorinated vinyl ethers, which may also be perfluorinated, such as perfluoromethyl vinyl ether. Comonomers that can be used for copolymerization with the gaseous fluorinated monomers include non-gaseous fluorinated monomers, i.e. fluorinated monomers that under the conditions of polymerization are in a liquid phase, and non-fluorinated monomers such as ethylene and propylene.

Examples of perfluorovinyl ethers that can be used in the process of the invention include those that correspond to the formula:

$$CF_2\text{=}CF\text{-}O\text{-}R_f$$

wherein $R_f$ represents a perfluorinated aliphatic group that may contain one or more oxygen atoms. Particularly preferred perfluorinated vinyl ethers correspond to the formula:

$$CF_2=CFO(R^a_fO)_n(R^b_fO)_mR^c_f$$

wherein $R^a_f$ and $R^b_f$ are different linear or branched perfluoroalkylene groups of 1 to 6 carbon atoms, in particular 2 to 6 carbon atoms, m and n are independently 0 to 10 and $R^c_f$ is a perfluoroalkyl group of 1 to 6 carbon atoms. Specific examples of perfluorinated alkylvinyl ethers include perfluoro methyl vinyl ether (PMVE), perfluoro ethyl vinyl ether (PEVE), and perfluoro n-propyl vinyl ether (PPVE-1). Specific examples of perfluorinated alkoxyvinyl ethers include perfluoro-2-propoxypropylvinyl ether (PPVE-2), perfluoro-3-methoxy-n-propylvinyl ether (MV-31), perfluoro-2-methoxy-ethylvinyl ether and $CF_3-(CF_2)_2-O-CF(CF_3)-CF_2-O-CF(CF_3)-CF_2-O-CF=CF_2$ (PPVE-3). Some of the aforementioned perfluorovinyl ethers will be liquid under the conditions of polymerization and are thus non-gaseous fluorinated monomers. Suitable fluorinated vinyl monomers correspond to the general formula:

$$CF_2=CF-R^d_f \text{ or } CH_2=CH-R^d_f$$

wherein $R^d_f$ represents a perfluoroalkyl group or perfluoroalkoxy group of 1 to 10, preferably 1 to 5 carbon atoms. A typical example of a perfluoroalkyl vinyl monomer is hexafluoropropylene.

Examples of fluoropolymers that may be produced with the process according to the invention include a copolymer of tetrafluoroethylene and hexafluoropropylene, a copolymer of tetrafluoroethylene and perfluorovinyl ether (e.g. PMVE, PPVE-1, PPVE-2 or a combination of PPVE-1 and PPVE-2), a copolymer of vinylidene fluoride and hexafluoropropylene, a copolymer of tetrafluoroethylene and vinylidene fluoride, a copolymer of chlorotrifluoroethylene and vinylidene fluoride, a copolymer of tetrafluoroethylene and ethylene, a copolymer of tetrafluoroethylene and propylene, a copolymer of vinylidene fluoride and perfluorovinyl ether (e.g. PMVE, PPVE-1, PPVE-2 or a combination of PPVE-1 and PPVE-2), a terpolymer of tetrafluoroethylene, hexafluoropropylene and perfluorovinyl ether (e.g. PMVE, PPVE-1, PPVE-2 or a combination of PPVE-1 and PPVE-2), a terpolymer of tetrafluoroethylene, ethylene or propylene and perfluorovinyl ether (e.g. PMVE, PPVE-1, PPVE-2 or a combination of PPVE-1 and PPVE-2), a terpolymer of tetrafluoroethylene, ethylene or propylene and hexafluoropropylene, a terpolymer of tetrafluoroethylene, vinylidene fluoride and hexafluoropropylene, a terpolymer of vinylidene fluoride, tetrafluoroethylene and perfluorovinyl ether (e.g. PMVE, PPVE-1, PPVE-2 or a combination of PPVE-1 and PPVE-2), and a copolymer of a copolymer of tetrafluoroethylene, ethylene or propylene, hexafluoropropylene and perfluorovinyl ether (e.g. PMVE, PPVE-1, PPVE-2 or a combination of PPVE-1 and PPVE-2).

As mentioned above, in the synthesis of the second fluoropolymer, the modifier, when used, may be added to the polymerization vessel in portions or in a continuous way. The modifier may be fed to the polymerization from a separate inlet or storage cylinder. Alternatively, a mixture of the modifier with a fluorinated monomer may be used to feed the modifier to the polymerization. The latter method may provide improved homogeneous incorporation of the modifier into the second fluoropolymer leading to a more uniform distribution of long chain branches. Suitable fluorinated monomers with which the modifier can be admixed to feed to the polymerization include fluorinated olefins such as CTFE, HFP and perfluorovinyl ethers such as perfluoromethyl vinyl ether.

In yet another aspect, the present invention relates to a method comprising melt-processing a first composition, wherein the first composition comprises a core-shell polymer having a first fluoropolymer portion, wherein a fluoropolymer having an identical chemical structure as the first polymer portion has a relaxation exponent of from 0.93 to 1.0, and a second fluoropolymer portion, wherein a polymer having an identical chemical structure as the second fluoropolymer portion has a relaxation exponent of from 0.3 to 0.92. The extrusion product has a lower width homogeneity index value than a comparative extrusion product formed by melt-processing a comparative composition wherein the comparative composition comprises a fluoropolymer having an identical chemical structure as the first polymer portion has a relaxation exponent of from 0.93 to 1.0 and is free of a polymer having an identical chemical structure as the second fluoropolymer portion has a relaxation exponent of from 0.3 to 0.92.

In some embodiments, the second fluoropolymer portion has a fluorine content that is within 40 wt% of the first fluoropolymer portion, even within 30 wt%, within 20 wt%, or within 10 wt%. In other embodiments, the fluorine content of the two portions differs by at least 1 wt%, differs by at least 5 wt%, differs by at least 10 wt%, or even by at least 20 wt%. In still other embodiments, the fluorine content of the two portions is the same.

The core-shell polymer, as well as the polymers having an identical chemical structure as each of the first and second fluoropolymer portions, is melt-processable and thermoplastic and each has a melting point between 100°C and 320°C.

The method for preparing the core-shell polymers described herein may include polymerizing, preferably by aqueous emulsion polymerization, (a) one or more first gaseous fluorinated monomers; with (b) one or more modifiers;

and (c) optionally one or more first comonomers selected from non-gaseous fluorinated monomers and non-fluorinated monomers. The method may further comprise adding a chain transfer agent to the polymerization. When a chain transfer agent is added after the polymerizing of the one or more gaseous fluorinated monomers and the one or more modifiers with the optional co-monomers, the chain transfer agent may be added in a sufficient quantity to control the average chain length of the thus-obtained polymer molecules. With this sequence, the second fluoropolymer portion is formed. Subsequently, or alternatively prior to, the polymerization of the second fluoropolymer portion, the method may comprise polymerizing, in the absence of the one or more modifiers, one or more second gaseous fluorinated monomers and optionally one or more second comonomers. The second gaseous fluorinated monomers and the optional second comonomers may be the same as the first gaseous fluorinated monomers and the optional first comonomers. This step produces the first fluoropolymer portion. The first fluoropolymer portion may make up either the core or the shell, and the second fluoropolymer portion may make up the other.

In the core-shell polymer, there may not be an abrupt changeover from the chemical structure of the core polymer and the shell polymer. That is, the core-shell polymer need not be a block copolymer. It may be that the first fluoropolymer portion and the second fluoropolymer portion are separated by a portion wherein the chemical composition of the core is transitioning to the chemical composition of the shell. This transition portion may have a general chemical structure having some characteristics of the core polymer and some chemical characteristics of the shell polymer. The relative amount of these chemical characteristics in the transition region will change from heavily core-resembling near the core polymer to heavily shell-resembling near the shell polymer. As noted above, either the first or second fluoropolymer may comprise the core, with the other comprising the shell. As contemplated herein, when a core-shell polymer is used in the methods provided herein, the mass ratio of the first fluoropolymer portion to the second fluoropolymer portion will be similar to or the same as the ratio of first to second fluoropolymer in analogous first compositions that contain a first and second fluoropolymer.

An abrupt change in chemical composition may be present in the core-shell polymers contemplated herein. Such a structure may be obtained, for instance, by preparation of the core-shell polymer using a so-called seed latex.

In some embodiments, the one or more modifiers are used in amount of typically up to 0.4% by weight (or higher) based on the total weight of monomers fed to the polymerization, particularly between 0.01 and 0.4% by weight. The modifier may be added in any amount as described herein for the formation of the second fluoropolymer.

The isolated first and second fluoropolymers, such as PFA and FEP, or the core-shell polymer, may be post-fluorinated subsequent to the polymer workup. During post-fluorination, any remaining hydrogen, bromine and/or iodine atoms in the fluoropolymer can be replaced with fluorine atoms. Further, any unstable end groups such as carboxylic acid groups, COF groups, amide groups, and -$CF_2CH_2OH$ groups, which may during melt processing of the fluoropolymer decompose and form HF, can be converted into stable $CF_3$ groups. The post-fluorination may be conducted under conditions sufficient such that not more than 30, not more than 20, or even not more than 10 unstable end groups per million carbon atoms are present in the fluoropolymer. Accordingly, a highly inert fluoropolymer may thereby be obtained. The post-fluorination may be carried out on the first or second fluoropolymer, on neither, or on both.

The preparation of the first compositions described herein may, alternatively, comprise mixing the first fluoropolymer and the second fluoropolymer. The mixing may comprise mixing a dispersion, for instance an aqueous dispersion, of each of the first and second fluoropolymers. The method may further comprise coagulating the dispersion mixture. The mixing may also be carried out by any of a number of other techniques, including blending the agglomerates of the first and the second fluoropolymers in a static mixer. The homogeneity of the blend can be further improved by an additional melt blend step, e.g. extrusion in a single screw, or a twin-screw extruder, or in an internal mixer (e.g., a Brabury mixer).

The compositions may contain a first and second fluoropolymer as described herein, in any relative amount. For instance, the presence of a second polymer may be in at least 90% by weight based on the total weight of the composition, at least 50%, at least 20%, at least 10%, at least 5%, or even at least 0.1% by weight. The first fluoropolymer may be present in up to 10% by weight based on the total weight of the composition, up to 50%, up to 80%, up to 90%, up to 95%, or even up to 99.9% by weight.

The compositions described herein are suitable for making a variety of articles and are in particular suitable in extrusion processing involving high elongational rates to produce articles. For example, the compositions can be used to make wires and cables in which they may present the advantage of having a high critical shear rate combined with a strain hardening behavior so that they can be rapidly processed and can be processed with high draw down ratios that may be used in wire and cable extrusion.

The strain hardening behavior is characterized by a strain hardening coefficient S of at least 1.2 or alternatively, a technological coefficient $F_{max}/p$ of at least 0.064. Generally, these properties are obtained without sacrificing the mechanical properties. Furthermore because of the strain hardening properties that the compositions according to the invention may possess, any diameter fluctuations that may result at high processing speeds with a high draw down ratio generally disappear during the melt-extrusion with the high drawing force applied. This is to be contrasted, for instance, to polymer blends comprising linear fluorothermoplasts that do not contain a second fluoropolymer as described herein, in which cone breaking of the melt-extruded composition would occur under high drawing forces at those spots were the article diameter is low as a result of diameter fluctuations occurring in the drawing process.

In some embodiments, the methods described herein may provide a process for fluoropolymer extrusion in which the stability of the melt cone is greatly enhanced when compositions comprising a first and second fluoropolymer (described above) are extruded, compared to extrusion of compositions comprising only a first fluoropolymer. As a result, homogeneity of wall thickness of the so-obtained articles may be significantly improved, along with the above-discussed lower width homogeneity index value. The extrusion products described herein are particularly useful when the fluoropolymer contains organic or inorganic fillers, such as carbon black, titanium dioxide, glass bubbles (S60HS, iM30K, etc), glass beads, glass microbeads, zinc oxide, zinc sulfide, calcium carbonate, nanoclay, nanosilica, stainless steel, bronze, carbon nanotubes, glass fibers or carbon fibers.

In some embodiments, the extrusion products described herein may be useful for backside films in photovoltaic modules, for frontside films for flexible photovoltaic modules, and/or for blown films for decorative applications, such as decorative films applied in the fuselage of aircraft.

The invention is further illustrated with reference to the following examples.

## EXAMPLES

### METHODS

The melt flow index (MFI), reported in g/10 min, was measured according to ASTM D-1238 at a support weight of 5.0 kg. Unless otherwise noted, a temperature of 265°C was applied and a standardized extrusion die of 2.1 mm diameter and a length of 8.0 mm was used.

Melting peaks of the fluororesins were determined according to ASTM 4591 by means of Perkin-Elmer DSC 7.0 (PerkinElmer Inc., Wellesley, MA) under nitrogen flow and a heating rate of 10°C/min. The indicated melting points relate to the melting peak maximum.

The latex particle size determination was conducted by means of dynamic light scattering with a Malvern Zetazizer 1000 HSA (Malvern Instruments Inc., Southborough, MA, USA) in accordance to ISO/DIS 13321. The reported average particle size is the Z-average. Prior to the measurements, the polymer latexes as yielded from the polymerizations were diluted with 0.001 mol/L KCl-solution, the measurement temperature was 20°C in all cases.

Oscillatory shear flow measurements were conducted on fluoropolymer melts using a strain controlled ARES rheometer (3ARES-13; Firmware version 4.04.00) (TA Instruments Inc., New Castle, DE, USA) equipped with a FRT 200 transducer with a force range of up to 200 g. Dynamic mechanical data were recorded at 265°C in nitrogen atmosphere in frequency sweep experiments using a 25 mm parallel plate geometry. The thermal control of the oven was operated using the sample/tool thermal element. A strain typically ascending from 1 to 20% was applied. Zero shear viscosities $\eta_0$, reported in units of Pa×s, were extrapolated from the viscosity function $\eta^*(\omega)$ using the 4 parameter *Carreau* fit function provided by the orchestrator software (version 7.0.8.13). The phase angle at gel point $\delta_c$, needed to evaluate the relaxation exponent $n$ ($n = \delta_c/90°$), was selected from the frequency where the 1st derivative of $\delta(\omega)$ passed the maximum or the 2nd derivative passed zero. Transient elongational viscosity functions in shear $\eta_0^+(t)$, needed to evaluate the quantity of strain hardening (see below), were calculated from the frequency sweep. Herein, the elongational viscosity was obtained by multiplying the viscosity $\eta^*$ by factor of 3 (according to the Trouton rule) and the time t was obtained from the inverse frequency ($t = 1/\omega$).

Transient uniaxial extensional measurements at 265°C were recorded in the same ARES rheometer using the ARES-EVF (Elongation Viscosity Fixture) tool (TA Instruments) (two rollers have a distance of 12.7 mm). The thermal control of the oven was operated in "Mode 3" using the thermal element in the oven. The polymer samples analyzed were taken from a press-sintered plate and had a rectangular geometry with the dimensions of usually 18 mm length, 9 to 11 mm height and 0.7 to 1.0 mm thickness. A preheat time of 100 s and an initial tension of 0.01 1/s were applied. The thermal expansion was compensated using a polymer density at room temperature of 1.8 g/cm³ and a polymer density at 265°C of 1.5 g/cm³. The elongational viscosity as a function of time $\eta_E^+(t)$ was recorded at strain rates $\varepsilon_0^\bullet$ of 1.0 and 3.0 s⁻¹ with the motor setting in strain controlled, continuous and transient mode. Although a Hencky (true) strain of maximum 4.9 (L/L₀ = 134) was achievable with the ARES-EVF device, a Hencky strain of 2.5 (L/L₀ = 2.2) was practically attainable. Unless otherwise noted, no cone break occurred during the measurement under these conditions.

The dimensionless strain hardening coefficient S was determined according to: $S = \eta_E^+(t,\varepsilon_0^\bullet) / [3 \times \eta_0^+(t)]$. Herein, $\eta_E^+(t,\varepsilon_0^\bullet)$ is the elongational viscosity taken at a Hencky strain of 2.2 (L/L₀ = 9.0) or 1.5 (L/L₀ = 4.5), alternatively and $\eta_0^+(t)$ is the transient elongational viscosity functions in shear calculated from the frequency sweep experiment.

In order to record the strain hardening with a spinning apparatus, the following experimental setup was chosen. Melt strands were extruded using a Rheograph 2000 capillary rheometer (Goettfert, Buchen, Germany). A standard capillary of 2.3 mm diameter and 36 mm length and a standard 500 bar pressure transducer were chosen. Unless otherwise noted, the melt temperature was 265°C. A piston speed of 0.5 mm/s was applied, which corresponds to an apparent shear rate of 47.3 s$^{-1}$. The so-extruded melt strand was taken by the rolls of a Rheotens 101.1 (Goettfert Inc., Buchen, Germany) so that the spinning length was 80 mm. The speed ramp chosen for the spinning experiment was 12 mm/s$^2$. The maximum roller force $F_{max.}$, reported in units of cN, was taken when a constant plateau value of the Rheotens force curve was reached. The pressure needed to evaluate $F_{max.}$/p was taken from the transducer of the capillary rheometer.

**Example 1**

A terpolymer of 55 mole % TFE, 12 mole % HFP and 33 mole % VDF was prepared in a polymerization kettle with a total volume of 186.1 L equipped with an impeller agitator system. According to the following procedure, the polymer preparation was tailored in a way that 85% of the polymer fraction had straight linear chain topography and 15% of the polymer fraction had long chain branched topography (percentages are given by total weight of the fluoropolymer).

A polymerization kettle with a total volume of 186.1 L was charged with 114.6 L deionized water, 7.6 g oxalic acid, 47 g ammonium oxalate and 947 g of a 30 weight % aqueous solution of perfluorooctanoate ammonium salt (APFO). The oxygen-free kettle was then heated up to 60° C and the agitation system was set to 210 rpm. The kettle was charged with 25 g ethane and 4220 g hexafluoropropylene (HFP) to a pressure of 9.5 bar absolute, with 480 g vinylidenefluoride (VDF) to 11.8 bar absolute and with 1350 g tetrafluoroethylene (TFE) to 15.5 bar absolute reaction pressure. A stainless steel cylinder used as a feeding line for HFP (total volume 5.41 L) was fully evacuated. After complete evacuation, the cylinder was charged with 30 g of bromodifluoroethylene (BDFE). Then the cylinder was rapidly charged with 1708 g HFP in order to ensure a sufficient dispersion of BDFE into HFP under turbulent flow conditions.

The polymerization was initiated by the addition of 100 ml 1.0 wt% aqueous potassium permanganate ($KMnO_4$) solution and a continuous feed of $KMnO_4$ solution was maintained with a feed rate of 300 ml/h. After the reaction started, the reaction temperature of 60°C and the reaction pressure of 15.5 bar absolute was maintained by feeding TFE, VDF, HFP and BDFE into the gas phase with an HFP/BDFE-blend (kg)/TFE (kg) feeding ratio of 0.338 and a VDF (kg)/TFE (kg) feeding ratio of 0.379. After 45 minutes when 5100 g of TFE was fed, an additional quantity of 18 g ethane was charged and the feed of HFP/BDFE-blend was interrupted. From that moment on, pure HFP was continuously fed into the gas phase (in place of the HFP/BDFE-blend) with an HFP (kg)/TFE (kg) feeding ratio of 0.335, until the total feed of 34.0 kg TFE was accomplished in 250 minutes reaction time. The monomer feed was interrupted by closing the monomer valves and the residual monomers were reacted down to 11.0 bar within 10 minutes. Then, the reactor was vented and flushed with $N_2$ in three cycles. The thus obtained 173 kg polymer dispersion was removed at the bottom of the reactor. It had a solid content of 34 wt% and an average latex particle diameter of 94 nm as determined by dynamic light scattering.

Two other polymerizations were conducted under the same conditions. The dispersions of these three polymerization batches were combined and passed through a glass column containing DOWEX 650C cation exchange resin (Dow Chemical Co, Midland, MI, USA). The dispersion was shear-coagulated using a GAULIN homogenizer (type 106MC4-8,8TBSX, Pannevis, Utrecht, Holland) and placed onto a continuous washing/filtration belt. The washed polymer agglomerate was compacted using a compactor (available from Kahl, Hamburg, Germany). The compacted polymer agglomerate was dried for 10 hours under reduced pressure at 110°C in a tumbling drier (available from OHL Apparatebau Limburg a.d., Lahn, Germany) and subsequently melt-pelletized. The 120 kg of the so-obtained polymer melt pellets showed the physical characteristics listed in Table 1.

**Table 1**

| | |
|---|---|
| Melting point maximum | 168°C |
| MFI (265/5) | 12.3 g/10 min |
| Zero shear viscosity at 265°C | 6600 Pa*s |
| Phase angle | 56° |
| Relaxation exponent | 0.62 |
| $S$ ($\varepsilon_0^{\bullet}$= 1.0 s$^{-1}$) | 2.0 |
| S ($\varepsilon_0^{\bullet}$= 3.0 s$^{-1}$) | 2.0 |
| $F_{max.}$/p | 0.13 cN/bar |

**Comparative Example CE-2**

A comparative linear terpolymer was prepared having 55 mole% TFE, 12 mole% HFP, and 33 mole% VDF.

The physical characteristics are summarized in Table 2.

**Table 2**

| Melting point maximum | 166°C |
|---|---|
| MFI (265/5) | 10.9 g/10 min |
| Zero shear viscosity at 265°C | 5300 Pa*s |
| Phase angle | 90° |
| Relaxation exponent | 1 |
| $S\ (\varepsilon_0{}^\bullet = 1.0\ \text{s}^{-1})$ | 1 |
| $S\ (\varepsilon_0{}^\bullet = 3.0\ \text{s}^{-1})$ | 1 |
| $F_{max}./p$ | 0.03 cN/bar |

**Film Extrusion**

Film extrusion was conducted with the polymer materials from Example 1 and from Comparative Example CE-2.

The extrusion set-up comprised of a 30 mm single screw (screw length 750 mm) extruder (available from Ide GmbH & co. KG, Ostfildern, Germany), a 150 mm film die (available from Breyer, Wülfrath, Germany) and a 3-roll stack (available from Collin GmbH, Ebersberg, Germany).

The temperature profile in the extruder for both materials tested was 210°C, 240°C, 250°C and 255°C from Zone 1 to Zone 4, respectively. A filter pack of 1000/500/200 $\mu$m was employed.

The pressure measured for a die gap of 2.5 mm was 12.6 bar with the CE-2 terpolymer and 8.5 bar with the polymer of Example 1. Thus, a draw-down of nominally 25 was achieved.

The die temperatures were all set at 250°C. The output was held constant at 6.2 kg for all experiments by employing a screw speed of 22 rpm. The 3-roll stack temperature was maintained at 80°C and a separation between the die and 3-roll stack of 30 mm was held constant. The elongation line speed was varied between 3.6 m/min and 13 m/min. The film was extruded and wound up and samples were cut directly from the line to make measurements, such that the film was not folded, deformed or compromised in any manner.

**Film Width Homogeneity**

It was observed that the homogeneity of the film extruded from the polymer of Example 1 was discernibly better than for the terpolymer of CE-2. For each individual line speed applied, the width and thickness of the so-obtained films were measured at 20 independent, randomly selected positions. With these data, the homogeneity index for the film width was evaluated according to the following Equations 1 and 2 (described above). The results of this evaluation are summarized in Table 3.

**Table 3**

| | Polymer Example 1 | | Polymer CE-2 | |
|---|---|---|---|---|
| **Elongation Line speed** | $\overline{b}$ | $r_s$ | $\overline{b}$ | $r_s$ |
| 3.6 m/min | 103 mm | 0 | 84 mm | 0 |
| 6 m/min | 102 mm | 0 | 67 mm | 0.036 |
| 9 m/min | 90 mm | 0.0087 | 54 mm | 0.062 |
| 13 m/min | 76 mm | 0.022 | 50 mm | 0.071 |

**Film Thickness Homogeneity**

In analogy to the evaluation described above, the homogeneity indices for the film thickness were evaluated from the extruded films according to Equations 3 and 4 (described above).

The results of this evaluation are summarized in Table 4.

**Table 4**

| | Polymer Example 1 | | Polymer CE-2 | |
|---|---|---|---|---|
| Elongation Line speed | $\overline{d}$ | $r_s$ | $\overline{d}$ | $r_s$ |
| 3.6 m/min | 122 μm | 0.0089 | 117 μm | 0.0082 |
| 6 m/min | 70 μm | 0.014 | 91 μm | 0.14 |

**Tube Extrusion**

Tube extrusion was conducted with the polymer materials from Example 1 and CE-2.

A 45 mm single screw extruder (screw length 1350 mm) (available from Siebe Engineering GmbH, Neustadt/Wied, Germany) equipped with a die having an inner diameter of 55.9 mm and a pin having a 44.7 mm outer diameter were used in this set-up. The tube calibrator had an outer diameter of 11.0 mm. In this fashion, tubes with a nominal outer diameter of 10 mm were produced, the inner diameter varied due to elongation line speeds as listed in Table 5.

With this varying line speed, the draw down ratio varied from nominally 37 at the low line speeds for both materials to nominally 90 and 120 at fast line speeds. The balance went from nominally 1.0 to 1.2 for both materials.

The temperature profile in the extruder for both materials tested was 170°C, 195°C, 220°C and 220°C from Zone 1 to Zone 4, respectively. The pressure measured with the CE-2 polymer was 34 bar and the pressure measured was 32 bar with the polymer of Example 1. The flanges, head and die temperatures were all set at 220°C. The output was held constant at 7.2 kg for all experiments by employing a screw speed of 10 rpm. The water temperature in the vacuum chamber was maintained at 27°C and a separation between the die and calibrator of 59 mm was held constant. As indicated in Table 5, the elongation line speed was varied between 2.5 m/min and 5 m/min for both materials tested.

It was observed that the wall thickness of the tubes extruded from the polymer of Example 1 was discernibly better than for the terpolymer of CE-2. Further, it was observed that the melt cone during the tube extrusion process of the polymer of Example 1 remained absolutely stable, whereas the melt cone of the terpolymer of CE-2 became instable and showed the tendency of sagging. The inhomogeneity indices for the tube wall thickness were evaluated similar to the procedure described above and according to Equations 3 and 4. The numerical results of this evaluation are summarized in Table 5.

**Table 5**

| | Cone length | Polymer Example 1 | | Polymer CE-2 | |
|---|---|---|---|---|---|
| Elongation Line speed | | $\overline{d}$ | $r_s$ | $\overline{d}$ | $r_s$ |
| 2.5 m/min | 75 mm | 1.8 | 0.009 | 1.8 | 0.013 |
| 4 m/min | 59 mm | 1.2 | 0.011 | 1.1 | 0.026 |
| 5 m/min | 49 mm | 0.8 | 0.012 | 0.8 | 0.042 |

**Filled Film Extrusion**

A film filled with 1 wt% glass bubbles was extruded with the polymer materials from Example 1 to create Example 3 and from CE-2 to create CE-4.

The extrusion set-up comprised of a 45 mm single screw (screw length 1350 mm; L/D=30) extruder from (available from Plastik Maschinenbau, Bongard/Kelberg, Germany) a 400 mm film die (available from EDI, Chippewa Falls, WI) and a chill roll.

The temperature profile in the extruder for the materials tested was 20°C, 153°C, 211°C and 229°C from Zone 1 to Zone 4, respectively, and 245°C in zones 5-9. A filter pack of 1000/200 μm was employed.

The pressure measured for a die gap of 1.25 mm was 80 bar with the terpolymers of CE-4 (THV 500AE - agglomerate form + 1 wt% glass bubbles) S60HS (gb) (available from the 3M Company, St. Paul, MN) and 92 bar with the polymer of Example 3 (composition from Example 1 + 1 wt% glass bubbles S60HS). Thus, draw-downs between 10 and 25 were achieved.

The die had a dimension of 39.7 cm. The die temperature was set at 270°C and the gap was set to a gap of 1.25 mm. The output was held constant at 9.9 kg/hour for all experiments by employing a screw speed of 8.5 rpm. The chill roll temperature was maintained at 63°C and a separation between the die and the chill roll was held constant in this example. The elongation line speed was varied between 1.8 m/min and 7.2 m/min for the CE-4 terpolymer and between 1.8 m/min and 17.0 m/min for Example 3. The film was extruded and wound up and samples were cut to make measurements.

Also in this experiment it was observed that the homogeneity of the film extruded from the polymer of Example 3 was discernibly better than for the terpolymer of CE-4. For each individual line speed applied, the widths and the thicknesses of the so-obtained films at 30 independent, randomly selected positions. With these data, the homogeneity index for the film width was evaluated according to the Equations 1 and 2 (described above).

The results of this evaluation are summarized in Table 6 for the terpolymer of CE-4. The results for Example 3 are summarized in Table 7.

**Table 6**

|  | Film width | | Film thickness | |  |
|---|---|---|---|---|---|
| Elongation Line speed | $\bar{b}$ | $r_s$ | $\bar{d}$ | $r_s$ | Observation |
| 1.8 m/min | 28.4 cm | 0*) | 202 $\mu$m | 3.3e-2 | Stable conditions |
| 3.6 m/min | 27.6 cm | 2.6e-3 | 159 $\mu$m | 8.2e-2 | Draw resonance |
| 7.2 m/min | - | - | - | - | Cone break |
| *) prepared with cut film edges. | | | | | |

**Table 7**

|  | Film width | | Film thickness | |  |
|---|---|---|---|---|---|
| Elongation Line speed | $\bar{b}$ | $r_s$ | $\bar{d}$ | $r_s$ | Observation |
| 1.8 m/min | 27.9 cm | 0*) | 192 $\mu$m | 1.6e-2 | Stable conditions |
| 3.6 m/min | 29.2 cm | 5.5e-4 | 156 $\mu$m | 5.2e-2 | Stable conditions |
| 7.2 m/min | 27.3 cm | 1.1e-3 | 106 $\mu$m | 7.0e-2 | Stable conditions |
| 12.5 m/min | 26.4 cm | 1,5e-3 | 77 $\mu$m | 5.5e-2 | Stable conditions |
| 15.0 m/min | 26.4 cm | 4.5e-4 | 76 $\mu$m | 6.8e-2 | Stable conditions |
| 16.2 m/min | - | - | - | - | Draw resonance |
| 17 m/min | - | - | - | - | Cone break |
| *) prepared with cut film edges. | | | | | |

Same setup as in the previous example except that instead of 1 wt% glass bubbles, 10 wt% titanium dioxide ($TiO_2$) (available from Kronos, Leverkusen, Germany) were added to the polymer of Example 1 to create Example 5 and to the terpolymer of CE-2 to create CE-6. The line speed was varied between 1.2 m/min and 7.2 m/min for CE-6. The films were extruded and wound up and samples were cut to make measurements. CE-6 ran under very unstable processing conditions at a line speed of 7.2 m/min, but it was possible to take a film sample before cone break occurred. The line speed for Example 5 was varied between 1.2 m/min and 15 m/min, and films were obtained under stable processing conditions.

For each individual line speed applied, the widths and the thicknesses of the so-obtained films was again measured at 30 independent, randomly selected positions. And again, the homogeneity index for the film width was evaluated according to the Equations 1 and 2 (described above). The results of this evaluation are summarized in Table 8 for CE-6. The results for Example 5 are summarized in Table 9.

**Table 8**

|  | Film width | | Film thickness | |
|---|---|---|---|---|
| Elongation Line speed | $\bar{b}$ | $r_s$ | $\bar{d}$ | $r_s$ |
| 1.2 m/min | 32.5 cm | 1.4e-3 | 326 $\mu$m | 6.8e-2 |
| 3.6 m/min | 29.1 cm | 1.1e-3 | 207 $\mu$m | 9.3e-2 |

(continued)

| Elongation Line speed | Film width | | Film thickness | |
|---|---|---|---|---|
| | $\overline{b}$ | $r_s$ | $\overline{d}$ | $r_s$ |
| 7.2 m/min | 23.5 cm | 1.4e-2 | 128 $\mu$m | 1.7e-1 |

**Table 9**

| Elongation Line speed | Film width | | Film thickness | |
|---|---|---|---|---|
| | $\overline{b}$ | $r_s$ | $\overline{d}$ | $r_s$ |
| 1.2 m/min | 32.8 cm | 4.2e-4 | 278 $\mu$m | 4.8e-2 |
| 3.6 m/min | 30.1 cm | 1.3e-3 | 192 $\mu$m | 6.7e-2 |
| 7.2 m/min | 27.0 cm | 1.7e-3 | 118 $\mu$m | 1.3e-1 |
| 12.0 m/min | 25.5 cm | 2.2e-3 | 92 $\mu$m | 1.5e-1 |
| 15.0 m/min | 25.4 cm | 6.5e-4 | 59 $\mu$m | 1.3e-1 |

**Claims**

1. A method comprising:

melt-processing a first composition wherein the first composition comprises a first fluoropolymer having a relaxation exponent of from 0.93 to 1.0 and a second fluoropolymer having a relaxation exponent of from 0.30 to 0.92, wherein the first and second fluoropolymers are melt-processable and thermoplastic and have a melting point of from 100°C to 320°C to give an extrusion product;
wherein at least one filler selected from the group of organic fillers and inorganic fillers is added to at least one of the first and second fluoropolymers, and
wherein the first fluoropolymer is selected from a copolymer of tetrafluoroethylene and hexafluoropropylene; a copolymer of tetrafluoroethylene, hexafluoropropylene, and vinylidene fluoride; a copolymer of tetrafluoropropylene and a perfluoro(alkyl vinyl) ether; and a copolymer of tetrafluoroethylene and perfluoro(alkoxy vinyl) ether.

2. A method according to claim 1 wherein the second fluoropolymer is derived from:

(a) one or more gaseous fluorinated monomers,
(b) one or more modifiers selected from

(i) olefins having a bromine or iodine atom bonded to a carbon of the double bond of the olefin,
(ii) olefins corresponding to the formula:

$$X^a_2C=CX^a\text{-}R_f\text{-}Br$$

wherein each $X^a$ independently represents hydrogen, fluorine, bromine, chlorine or iodine, $R_f$ is a perfluoroalkylene group, a perfluorooxyalkylene group or a perfluoropolyether group;
(iii) olefins corresponding to one of the following general formulas:

$$CR_1R_2=CF\text{-}(CF_2)_n\text{-}O\text{-}(CF_2)_m\text{-}CF=CR_3R_4$$

$$CR_1R_2=CF\text{-}CF_2\text{-}O\text{-}Rf_1\text{-}O\text{-}CF_2\text{-}CF=CR_3R_4$$

$$X\text{-}Rf_2\text{-}Y$$

wherein each X and Y is independently selected from $R_1R_2C=CR_3$-; $R_1R_2CCR_3$-O-; and

$R_1R_2C=CR_3-CR_4R_5-O-$;

wherein each of $R_1$, $R_2$, $R_3$, $R_4$ and $R_5$ is independently selected from $Rf_1$, F, and H;

wherein $R_{f1}$ is selected from $Rf_2$, a perfluoroalkyl group, a perfluoroalkyl ether group and a perfluoroalkyl polyether group; and

wherein $Rf_2$ is a an aryl group selected from a non-substituted group and a substituted group, further wherein the substituted aryl group has a substituent selected from one or more halogen other than F; one or more perfluorinated alkyl group; one or more perfluorinated alkoxy group; one or more perfluorinated poly oxy alkyl group; one or more phenyl group; one or more phenoxy group; and combinations thereof,

and wherein the phenyl and phenoxy groups are selected from non-substituted groups and substituted groups, further wherein the substituted groups comprise a substituent selected from one or more perfluorinated alkyl group, one or more perfluorinated alkoxy group, one or more perfluorinated polyoxy alkyl group, one or more halogens other than F, and combinations thereof;

wherein n and m are each independently selected from an integer of from 0 to 6 with the proviso that n and m are not both 0; and

(v) mixtures thereof; and

(c) optionally one or more comonomers selected from non-gaseous fluorinated monomers and non-fluorinated monomers.

3. A method according to claim 2 wherein the olefin having a bromine or iodine atom bonded to a carbon of the double bond of the olefin corresponds to the general formula:

$X_2C=CXZ$

wherein each X may be the same or different and is selected from the group consisting of hydrogen, F, Cl, Br and I, with the proviso that at least one X represents Br or I, Z represents hydrogen, F, Cl, Br, I, a perfluoroalkyl group, a perfluoroalkoxy group or a perfluoropolyether group.

4. A method according to claim 3 wherein X is selected from hydrogen, F and Br with the proviso that at least one X represents Br and Z is hydrogen, F, Br, a perfluoroalkyl group or a perfluoroalkoxy group.

5. A method according to claim 2 wherein $Rf_2$ is perfluorinated.

6. A method according to claim 1 comprising from 0.1 to 90% by weight of the second fluoropolymer and from 10 to 99.9% by weight of the first fluoropolymer, based on the total weight of the first and second fluoropolymers.

7. A method according to claim 1 comprising from 5 to 50% by weight of the second fluoropolymer and from 50 to 95% by weight of the first fluoropolymer, based on the total weight of the first and second fluoropolymers.

8. A method according to claim 1 wherein the first composition comprises a core-shell polymer having a first fluoropolymer portion, wherein a fluoropolymer having an identical chemical structure as the first polymer portion has a relaxation exponent of from 0.93 to 1.0, and a second fluoropolymer portion, wherein a fluoropolymer having an identical chemical structure as the second fluoropolymer portion has a relaxation exponent of from 0.3 to 0.92, where the mass ratio of the first fluoropolymer portion to the second fluoropolymer portion is from 1000:1 to 1:9; further wherein the extrusion product has a lower width homogeneity index value than a comparative extrusion product formed by melt-processing a comparative composition wherein the comparative composition comprises the fluoropolymer having an identical chemical structure as the first polymer portion having a relaxation exponent of from 0.93 to 1.0 and the comparative composition is free of the polymer having an identical chemical structure as the second fluoropolymer portion having a relaxation exponent of from 0.3 to 0.92.

9. The method of claim 8 wherein the core of the core-shell polymer is the first fluoropolymer.

10. The method of claim 8 wherein the core of the core-shell polymer is the second fluoropolymer.

11. The method of claim 1 wherein melt-processing is selected from wire and cable extrusion, tube extrusion, film extrusion, and blow molding.

**12.** An article selected from a wire or cable, a film, and a tube comprising the melt extrusion product obtained by the method of claim 1.

**Patentansprüche**

**1.** Verfahren, umfassend:

Schmelzverarbeitung einer ersten Zusammensetzung, wobei die erste Zusammensetzung ein erstes Fluorpolymer mit einem Relaxationsexponenten von 0,93 bis 1,0 und ein zweites Fluorpolymer mit einem Relaxationsexponenten von 0,30 bis 0,92 umfasst, wobei die ersten und zweiten Fluorpolymere in der Schmelze verarbeitungsfähig und thermoplastisch sind und einen Schmelzpunkt von 100 °C bis 320 °C haben, um ein Extrudat zu ergeben;

wobei zu mindestens einem der ersten und zweiten Fluorpolymere mindestens ein Füllstoff zugegeben wird, der ausgewählt ist aus der Gruppe bestehend aus organischen Füllstoffen und anorganischen Füllstoffen, und wobei das erste Fluorpolymer ausgewählt ist aus der Gruppe bestehend aus einem Copolymer aus Tetrafluorethylen und Hexafluorpropylen, einem Copolymer aus Tetrafluorethylen und Hexafluorpropylen und Vinylidenfluorid; einem Copolymer aus Tetrafluorpropylen und einem Perfluor(alkylvinyl)ether und einem Copolymer aus Tetrafluorethylen und Perfluor(alkoxyvinyl)ether.

**2.** Verfahren nach Anspruch 1, wobei das zweite Fluorpolymer abgeleitet ist von:

(a) einem oder mehreren gasförmigen fluorierten Monomeren,
(b) einem oder mehreren Modifikatoren, ausgewählt aus

(i) Olefinen mit einem Brom- oder Iodatom, gebunden an einen Kohlenstoff der Doppelbindung des Olefins,
(ii) Olefinen entsprechend der Formel:

$$X^a_2C=CX^a\text{-}R_f\text{-}Br$$

worin jedes $X^a$ unabhängig Wasserstoff, Fluor, Brom, Chlor oder Iod darstellt, $R_f$ eine Perfluoralkylen-Gruppe, eine Perfluoroxyalkylen-Gruppe oder eine Perfluorpolyether-Gruppe ist;
(iii) Olefinen entsprechend einer der folgenden allgemeinen Formeln:

$$CR_1R_2=CF\text{-}(CF_2)_n\text{-}O\text{-}(CF_2)_m\text{-}CF=CR_3R_4$$

$$CR_1R_2=CF\text{-}CF_2\text{-}O\text{-}Rf_1\text{-}O\text{-}CF_2\text{-}CF\text{-}CR_3R_4$$

$$X\text{-}Rf_2\text{-}Y$$

worin X und Y jeweils unabhängig ausgewählt sind aus $R_1R_2C=CR_3\text{-}$; $R_1R_2C=CR_3\text{-}O\text{-}$; und $R_1R_2C=CR_3\text{-}CR_4R_5\text{-}O\text{-}$;
worin jedes $R_1$, $R_2$, $R_3$, $R_4$ und $R_5$ jeweils unabhängig ausgewählt sind aus: $Rf_1$, F und H;
worin $Rf_1$ ausgewählt ist aus $Rf_2$, einer Perfluoralkyl-Gruppe, einer Perfluoralkylether-Gruppe und einer Perfluoralkylpolyether-Gruppe; und
worin $Rf_2$ eine Aryl-Gruppe ist, ausgewählt aus einer nichtsubstituierten Gruppe und einer substituierten Gruppe, ferner worin die substituierte Aryl-Gruppe einen Substituenten hat, der ausgewählt ist aus einem oder mehreren Halogenen außer F; einer oder mehreren perfluorierten Alkyl-Gruppen; einer oder mehreren perfluorierten Alkoxy-Gruppen; einer oder mehreren perfluorierten Polyoxyalkyl-Gruppen, einer oder mehreren Phenyl-Gruppen, einer oder mehreren Phenoxy-Gruppe, und Kombinationen davon,
und wobei die Phenyl- und Phenoxy-Gruppen ausgewählt sind aus nichtsubstituierten Gruppen und substituierten Gruppen, ferner worin die substituierten Gruppen einen Substituenten aufweisen, der ausgewählt ist aus einer oder mehreren perfluorierten Alkyl-Gruppen, einer oder mehreren perfluorierten Alkoxy-Gruppen, einer oder mehreren perfluorierten Polyoxyalkyl-Gruppen, einem oder mehreren Halogenen außer F und Kombinationen davon;
worin n und m unabhängig ausgewählt sind aus einer ganzen Zahl von 0 bis 6 unter der Voraussetzung, dass n und m nicht beide 0 sind; und

(v) Mischungen davon; und

(c) wahlweise einem oder mehreren Comonomeren, die ausgewählt sind aus nichtgasförmigen, fluorierten Monomeren und nichtfluorierten Monomeren.

**3.** Verfahren nach Anspruch 2, wobei das Olefin mit einem Brom- oder Iodatom gebunden an einen Kohlenstoff der Doppelbindung des Olefins der allgemeinen Formel entspricht:

$$X_2C=CXZ$$

worin X jeweils gleich oder verschieden sein kann und ausgewählt ist aus der Gruppe bestehend aus Wasserstoff, F, Cl, Br und I unter der Voraussetzung, dass mindestens ein X Br oder I darstellt, und Z Wasserstoff, F, Cl, Br, I, eine Perfluoralkyl-Gruppe, eine Perfluoralkoxy-Gruppe oder eine Perfluorpolyether-Gruppe darstellt.

**4.** Verfahren nach Anspruch 3, wobei X ausgewählt ist aus Wasserstoff, F und Br unter der Voraussetzung, dass mindestens ein X Br darstellt und Z Wasserstoff, F, Br, eine Perfluoralkyl-Gruppe oder eine Perfluoralkoxy-Gruppe ist.

**5.** Verfahren nach Anspruch 2, wobei $Rf_2$ perfluoriert ist.

**6.** Verfahren nach Anspruch 1, umfassend von 0,1 bis 90 Gew.-% des zweiten Fluorpolymers und von 10 bis 99,9 Gew.-% des ersten Fluorpolymers bezogen auf das Gesamtgewicht der ersten und zweiten Fluorpolymere.

**7.** Verfahren nach Anspruch 1, umfassend von 5 bis 50 Gew.-% des zweiten Fluorpolymers und von 50 bis 95 Gew.-% des ersten Fluorpolymers, bezogen auf das Gesamtgewicht der ersten und zweiten Fluorpolymere.

**8.** Verfahren nach Anspruch 1, wobei die erste Zusammensetzung ein Kern-Schale-Polymer mit einem ersten Fluorpolymer-Anteil aufweist, wobei ein Fluorpolymer, das eine identische chemische Struktur hat wie der erste Fluorpolymer-Anteil, einen Relaxationsexponenten von 0,93 bis 1,0 hat und ein zweiter Fluorpolymer-Anteil einen Relaxationsexponenten von 0,3 bis 0,92 hat,
wobei das Masseverhältnis des ersten Fluorpolymer-Anteils zu dem zweiten Fluorpolymer-Anteil von 1000:1 bis 1:9 beträgt;
wobei ferner das Extrudat eine geringere Breite des Wertes des Homogenitätsindexes hat als ein Vergleichsextrudat, das durch Schmelzverarbeitung einer Vergleichszusammensetzung erzeugt wurde, wobei die Vergleichszusammensetzung, die das Fluorpolymer mit einer identischen chemischen Struktur wie der erste Polymer-Anteil aufweist, einen Relaxationsexponenten von 0,93 bis 1,0 hat, und die Vergleichszusammensetzung frei ist von dem Polymer, das eine identische chemische Struktur hat wie der zweite Fluorpolymer-Anteil mit einem Relaxationsexponenten von 0,3 bis 0,92.

**9.** Verfahren nach Anspruch 8, wobei der Kern des Kern-Schale-Polymers das erste Fluorpolymer ist.

**10.** Verfahren nach Anspruch 8, wobei der Kern des Kern-Schale-Polymers das zweite Fluorpolymer ist.

**11.** Verfahren nach Anspruch 1, wobei die Schmelzverarbeitung ausgewählt wird aus Draht und Kabelextrusion, Schlauchextrusion, Folienextrusion und Blasformen.

**12.** Artikel, ausgewählt aus einem Draht oder Kabel, einer Folie, einem Schlauch, der/die das durch das Verfahren nach Anspruch 1 erhaltene Extrudat umfasst.

**Revendications**

**1.** Procédé comprenant les étapes consistant à :

traiter par fusion une première composition, dans lequel la première composition comprend un premier fluoropolymère possédant un exposant de relaxation allant de 0,93 à 1,0 et un deuxième fluoropolymère possédant un exposant de relaxation allant de 0,30 à 0,92, dans lequel les premier et deuxième fluoropolymères peuvent être traités par fusion et sont thermoplastiques et ont un point de fusion allant de 100 °C à 320 °C pour donner un produit d'extrusion ;

dans lequel au moins une charge choisie parmi le groupe de charges organiques et de charges inorganiques est ajoutée à au moins un des premier et deuxième fluoropolymères, et

dans lequel le premier fluoropolymère est choisi parmi un copolymère de tétrafluoroéthylène et d'hexafluoropropylène, un copolymère de tétrafluoroéthylène, du fluorure d'hexafluoropropylène et de vinylidène ; un copolymère de tétrafluoropropylène et un éther perfluoro(alkyl-vinylique) ; et un copolymère de tétrafluoroéthylène et d'éther perfluoro(alcoxy-vinylique).

2. Procédé selon la revendication 1, dans lequel le deuxième fluoropolymère est dérivé de :

(a) un ou plusieurs monomères fluorés gazeux,
(b) un ou plusieurs agents modifiants choisis parmi

(i) des oléfines comportant un atome de brome ou d'iode lié à un carbone de la double liaison de l'oléfine,
(ii) des oléfines correspondant à la formule :

$$X^a_2C=CX^a\text{-}R_f\text{-}Br$$

où chaque $X^a$ représente indépendamment hydrogène, fluor, brome, chlore ou iode, $R_f$ est un groupe perfluoroalkylène, un groupe perfluorooxyalkylène ou un groupe perfluoropolyéther ;
(iii) des oléfines correspondant à l'une parmi les formules générales suivantes :

$$CR_1R_2=CF\text{-}(CF_2)_n\text{-}O\text{-}(CF_2)_m\text{-}CF=CR_3R_4$$

$$CR_1R_2=CF\text{-}CF2\text{-}O\text{-}Rf_1\text{-}O\text{-}CF_2\text{-}CF=CR_3R_4$$

$$X\text{-}Rf_2\text{-}Y$$

où chaque X et chaque Y sont indépendamment choisis parmi $R_1R_2C=CR_3\text{-}$ ; $R_1R_2C=CR_3\text{-}O\text{-}$ ; et $R_1R_2C=CR_3\text{-}CR_4R_5\text{-}O\text{-}$ ;
où chacun parmi $R_1$, $R_2$, $R_3$, $R_4$ et $R_5$ est indépendamment choisi parmi $Rf_1$, F et H ;
où $Rf_1$ est choisi parmi $Rf_2$, un groupe perfluoroalkyle, un groupe éther perfluoroalkylique et un groupe polyéther perfluoroalkylique ; et
où $Rf_2$ est un groupe aryle choisi parmi un groupe non substitué et un groupe substitué, où en outre le groupe aryle substitué a un substituant choisi parmi un ou plusieurs halogènes autres que F ; un ou plusieurs groupes alkyle perfluoré ; un ou plusieurs groupes alcoxy perfluoré ; un ou plusieurs groupes polyoxy alkyle perfluoré ; un ou plusieurs groupes phényle ; un ou plusieurs groupe phénoxy ; et des combinaisons de ceux-ci,
et où les groupes phényle et phénoxy sont choisis parmi des groupes non substitués et des groupes substitués, où en outre les groupes substitués comprennent un substituant choisi parmi un ou plusieurs groupes alkyle perfluoré, un ou plusieurs groupes alcoxy perfluoré, un ou plusieurs groupes polyoxy alkyle perfluoré, un ou plusieurs halogènes autres que F, et des combinaisons de ceux-ci ;
où n et m sont chacun indépendamment choisis parmi un nombre entier allant de 0 à 6 à condition que n et m ne soient pas l'un et l'autre 0 ; et

(v) leurs mélanges ; et

(c) facultativement un ou plusieurs comonomères choisis parmi des monomères fluorés non gazeux et des monomères non fluorés.

3. Procédé selon la revendication 2, dans lequel l'oléfine comportant un atome de brome ou d'iode lié à un carbone de la double liaison de l'oléfine correspond à la formule générale ;

$$X_2C=CXZ$$

dans laquelle chaque X peut être identique ou différent et est choisi dans le groupe constitué d'hydrogène, F, Cl, Br et I, à condition qu'au moins un X représente Br ou I, Z représente l'hydrogène, F, Cl, Br, I, un groupe perfluoroalkyle, un groupe perfluoroalcoxy ou un groupe perfluoropolyéther.

4. Procédé selon la revendication 3, dans lequel X est choisi parmi l'hydrogène, F et Br à condition qu'au moins un X représente Br et Z est un hydrogène, F, Br, un groupe perfluoroalkyle ou un groupe perfluoroalcoxy.

5. Procédé selon la revendication 2, dans lequel $Rf_2$ est perfluoré.

6. Procédé selon la revendication 1, comprenant de 0,1 à 90 % en poids du deuxième fluoropolymère et de 10 à 99,9 % en poids du premier fluoropolymère, sur base du poids total des premier et deuxième fluoropolymères.

7. Procédé selon la revendication 1, comprenant de 5 à 50 % en poids du deuxième fluoropolymère et de 50 à 95 % en poids du premier fluoropolymère, sur base du poids total des premier et deuxième fluoropolymères.

8. Procédé selon la revendication 1, dans lequel la première composition comprend un polymère noyau-enveloppe ayant une première partie fluoropolymère, dans lequel un fluoropolymère ayant une structure chimique identique à la première partie polymère a un exposant de relaxation allant de 0,93 à 1,0, et une deuxième partie fluoropolymère, dans lequel un fluoropolymère ayant une structure chimique identique à la deuxième partie fluoropolymère a un exposant de relaxation allant de 0,3 à 0,92,

où le rapport massique de la première partie fluoropolymère sur la deuxième partie fluoropolymère va de 1000:1 à 1:9 ; où en outre le produit d'extrusion a une valeur d'indice d'homogénéité de largeur plus basse qu'un produit d'extrusion comparable formé par traitement par fusion une composition comparable où la composition comparable comprend le fluoropolymère ayant une structure chimique identique à la première partie polymère ayant un exposant de relaxation allant de 0,93 à 1,0 et la composition comparable est dépourvue du polymère ayant une structure chimique identique à la deuxième partie fluoropolymère ayant un exposant de relaxation allant de 0,3 à 0,92.

9. Procédé selon la revendication 8, dans lequel le noyau du polymère noyau-enveloppe est le premier fluoropolymère.

10. Procédé selon la revendication 8, dans lequel le noyau du polymère noyau-enveloppe est le deuxième fluoropolymère.

11. Procédé selon la revendication 1, dans lequel le traitement par fusion est choisi parmi une extrusion de fil et câble, une extrusion de tube, une extrusion de film et un moulage par soufflage.

12. Article choisi parmi un fil ou câble, un film, et un tube, comprenant le produit d'extrusion en fusion obtenu par le procédé selon la revendication 1.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2004111124 A2
- WO 2004094491 A

- EP 1189953 A

**Non-patent literature cited in the description**

- **R. N. SHROFF ; H. MAVRIDIS.** *Macromol.,* 1999, vol. 32, 8464-8464
- *MACROMOL.,* 2001, vol. 34, 7362-7367

- **STANGE et al.** *Macromol.,* 2007, vol. 40 (7), 2409